# EUROPÄISCHE PATENTSCHRIFT

(11) **EP 3 228 767 B1**
(45) Veröffentlichungstag und Bekanntmachung des Hinweises auf die Patenterteilung: **21.08.2019**
(21) Anmeldenummer: 17000271.1
(22) Anmeldetag: 21.02.2017
(51) Int. Cl.: E03F 5/22, F04D 15/02

(54) **VERFAHREN ZUM BETREIBEN EINES DRUCKENTWÄSSERUNGSSYSTEMS FÜR ABWÄSSER**
METHOD FOR OPERATING A PRESSURE DRAINAGE SYSTEM FOR WASTE WATER
PROCÉDÉ DE FONCTIONNEMENT D'UN SYSTÈME D'ASSÈCHEMENT PAR PRESSION POUR EAUX USÉES

(30) Priorität: 10.03.2016 DE 102016002991; 30.03.2016 DE 102016003654
(43) Veröffentlichungstag der Anmeldung: 11.10.2017
(73) Patentinhaber: WILO SE, 44263 Dortmund (DE)
(72) Erfinder: Szeroki, Andrzej, 15-573 Bialystok (PL)
(74) Vertreter: Cohausz Hannig Borkowski Wißgott

(56) Entgegenhaltungen:
- EP-A1- 2 746 477
- GB-A- 2 298 292
- GB-A- 2 512 084

## Beschreibung

Die Erfindung betrifft ein Verfahren zum Betreiben eines Druckentwässerungssystems für Abwässer, das mit einander verbundene Streckenabschnitte zur Leitung von Abwasser zu einer Übergabestation und eine Vielzahl an die Streckenabschnitte angeschlossene Pumpstationen zum Sammeln des Abwassers aufweist.

Druckentwässerungssysteme sind seit Jahrzehnten bekannt und werden weltweit genutzt. Zahlreiche Anwendungen des Abwassertransports basieren auf diesem Prinzip und können in den Vereinigten Staaten, Europa, Asien und Afrika gefunden werden. Dank ihrer technologischen Vorteile sind Druckentwässerungssysteme attraktive Alternativen zu dem konventionellen schwerkraftbasierten Abwassertransport. Druckentwässerungssysteme ermöglichen es, eine Abwasserinfrastruktur in Gegenden zu erstellen, in denen die systematische Abwasserentsorgung aus technischen Gründen oder wirtschaftlichen Gründen nicht möglich ist.

Während herkömmliche schwerkraftbasierte Abwassersysteme eine Neigung der Abwasserleitungen zwischen 0,05% und 1% erfordern, damit das Abwasser fließt, und aufgrund dessen innerhalb einer Abwasserstrecke von einem Kilometer zwei Pumpstationen erfordern, um das Abwasser wieder auf ein höheres Niveau zu heben, sind Druckentwässerungssysteme von einer solchen Neigung unabhängig und benötigen ferner keine zwischengeschalteten Pumpstationen, um das Abwasser zu heben. Bei Druckentwässerungssystemen wird die Schwerkraft lediglich entstehungsnah ausgenutzt, nämlich um häusliches Abwasser über eine lokale Abwasserleitung von einem Haus in einen hausnahen Abwassersammelbehälter zu leiten. Dieser Sammelbehälter bildet mitsamt einem innenliegenden Pumpenaggregat eine Pumpstation. Das Pumpenaggregat ist über eine Druckleitung an eine weitere Abwasserleitung angeschlossen, die vollständig mit Abwasser gefüllt ist und durch die das Abwasser unter Druck gefördert wird. Die Abwasserleitung kann Teil eines sich weit erstreckenden, hierarchischen Netzes aus weiteren Abwasserleitungen sein, die zu einer zentralen Übergabestelle führen, in die sich der Druck des Abwasserleitungsnetzes entspannen kann. An jede dieser Abwasserleitungen können eine oder mehrere der genannten Pumpstationen angeschlossen sein. Im Betrieb verbringen sie das gesammelte Abwasser in die Abwasserleitung und "schieben" das darin schon befindliche Abwasser weiter nach vorn in Richtung Übergabestelle.

Die Sammelbehälter einer Abwasserpumpstation umfassen in der Regel zwischen 100 und 150 I. Die darin befindlichen Pumpenaggregate, beispielsweise eine Verdrängerpumpe oder Kreiselpumpe, werden pegelstandsabhängig aktiviert und deaktiviert. Wird ein bestimmter oberer Grenzpegel überschritten, erfolgt die Aktivierung, bei Unterschreiten eines unteren Grenzpegels, wird die Pumpe wieder abgeschaltet. Dies erfolgt durchschnittlich 4 Mal am Tag, wobei die Gesamtbetriebsdauer durchschnittlich 6 Minuten beträgt. Somit hat jedes Betriebsintervall einer Pumpstation eine Dauer von ca. 1,5 Minuten. Die Steuerung der Pumpstation erfolgt folglich dezentral füllstandsabhängig.

Es sind jedoch auch Systeme bekannt, bei denen eine zentrale Steuerung erfolgt. Dies ist beispielsweise in der europäischen Patentanmeldung EP 2 746 477 A1 und den britischen Patentanmeldungen GB 2298292 A, GB 2512084 A der Fall. Die zentrale Steuerung der Pumpstationen eines Abwassersystems hat durchaus Vorteile, erfordert jedoch auch einen höheren Planungs-, Installations- und Wartungsaufwand, da die Kommunikation von und zu den Pumpstationen berücksichtigt werden muss, die zum einen ausfallsicher, zum anderen mit geringem Aufwand verbunden sein soll. Zudem ist das pegelstandsabhängige Aktivieren der Pumpstationen nach wie vor der beste Weg für einen sicheren Betrieb, um ein Überlaufen und damit einen Schaden für die Umwelt zu verhindern, was letztendlich auch Haftungsaspekte einschließt. Aus diesem Grunde sieht die Fachwelt von zentral gesteuerten Systemen eher ab.

Bei der Dimensionierung der Rohrleitungsdurchmesser für Abwassersysteme wird ein hypothetischer maximaler Zufluss an Abwasser, der vom System aufgenommen werden muss, oder eine maximale Anzahl gleichzeitig pumpender Pumpstationen angenommen. Im Allgemeinen muss das Abwassersystem für maximale Kapazität ausgelegt sein. Dabei wird in der Regel jedoch nicht das Verhalten der Nutzer berücksichtigt. Denn oftmals variiert beispielsweise die Verteilung und Menge des aktuellen Zuflusses in das Abwassersystem örtlich sehr stark. In Touristengebieten, in denen die Touristen zu verschiedenen Zeiten des Tages die Hotels und Gasthäuser verlassen und in diese zurückkehren, ist das Nutzerverhalten und damit die zeitliche und örtliche Verteilung des aufzunehmenden Abwassers anders als in ländlichen Gegenden, wo der Abwasserzufluss weitgehend von den üblichen Arbeitszeiten und Routinen des Alltags der Bevölkerung abhängig ist. So variiert der Zufluss beispielsweise von 1% bei Nacht bis mehr als 10 % des täglichen Gesamtzuflusses zu Spitzenzeiten.

Das Außerachtlassen nutzungsbedingter geographischer Besonderheiten hat gleichwohl den Vorteil, dass das Abwassersystem stets sicher ausgelegt ist. Eine Kehrseite dieses Vorgehens ist jedoch die Überdimensionierung der Rohrleitungen im Vergleich zu den tatsächlichen Bedürfnissen. Zusätzlich ist zu berücksichtigen, dass der maximale Zufluss nur etwa 2 bis 3 Stunden am Tag vorliegt, was gerade mal 10 % der Gesamtbetriebszeit des Abwassersystems ist. Mit anderen Worten muss das Druckentwässerungssysteme 90 % seiner Betriebszeit nur geringe Zuflüsse weiterleiten. Dies hat einen wesentlichen Nachteil auf die Fließgeschwindigkeit in den Rohrleitungen, insbesondere bei überdimensionierten Systemen mit großen Rohrleitungsdurchmessern.

Um eine Verstopfung zu verhindern, wird bei der Planung von Druckentwässerungssystemen eine notwendige Mindestfließgeschwindigkeit, in der Regel 0,7 Meter pro Sekunde, angenommen. Es wäre optimal, diese Mindestfließgeschwindigkeit während der gesamten Betriebszeit des Abwassersystems beizubehalten. Gleichwohl wird sie während der Spitzenzeiten um ein Vielfaches überschritten und außerhalb der Spitzenzeiten kaum erreicht. In Folge dessen kommt es immer wieder zu Verstopfungen, die einen erhöhten Wartungsaufwand und damit Kosten nach sich ziehen.

Es ist daher eine Aufgabe der vorliegenden Erfindung, den Betrieb eines Druckentwässerungssystems zu verbessern und das Risiko einer Verstopfung zu minimieren. Diese Aufgabe wird durch das Verfahren mit den Merkmalen des Anspruchs 1 gelöst. Vorteilhafte Weiterbildungen sind in den Unteransprüchen angegeben oder werden nachfolgend beschrieben.

Erfindungsgemäß wird vorgeschlagen, dass zumindest ein Teil der Pumpstationen jeweils zumindest eine ihre Pumpbereitschaft anzeigende Zustandsinformation zu einer zentralen Steuereinheit übertragen und danach aus der Menge derjenigen Pumpstationen, deren Pumpbereitschaft vorliegt, bezogen auf einen der Streckenabschnitte eine Gruppe derart gebildet wird, dass die Anzahl der Pumpstationen der Gruppe mindestens einer diesem Streckenabschnitt zugeordneten Mindestanzahl an Pumpstationen entspricht, wobei die Pumpstation oder Pumpstationen der Gruppe anschließend von der zentralen Steuereinheit gleichzeitig aktiviert werden. Im Sinne der vorliegenden Erfindung bedeutet der Begriff "Gruppe" nicht unbedingt "mehrere Pumpstationen". Vielmehr kann eine Gruppe im einfachsten Fall auch nur eine Pumpstation umfassen, nämlich wenn dem zugehörigen Streckenabschnitt eine Mindestanzahl von "1" zugeordnet ist.

Das erfindungsgemäße Verfahren zum Betreiben eines Druckentwässerungssystems basiert somit auf einer zentral gesteuerten Aktivierung der Pumpstationen, von denen es eine Vielzahl aufweist. Die Deaktivierung kann wie üblich rein lokal aufgrund Erreichens eines unteren Füllstandspegels erfolgen. Die Aktivierung erfolgt nach einem intelligenten Aktivierungsschema, das verschiedene Regeln berücksichtigt. Ein Kerngedanke des Verfahrens besteht in einer Vergleichmäßigung des Pumpenbetriebs. So soll beispielsweise verhindert werden, dass unnötig viele Pumpstationen gleichzeitig pumpen, wodurch ein Volumenstrom in den Abwasserleitungen provoziert wird, der im Vergleich zu der lediglich notwendigen Mindestfließgeschwindigkeit unnötig hoch ist. Durch das gleichzeitige Pumpen vieler Pumpstation wird frühzeitig Abwasser verschwendet, welches besser dann eingesetzt werden könnte, wenn nur einzelne oder wenige Pumpstationen geleert werden müssen, deren Fördermenge jedoch nicht ausreicht, um die Mindestfließgeschwindigkeit zu erreichen. Durch das erfindungsgemäße Verfahren kann erreicht werden, dass in den Abwasserleitungen weitgehend eine bestimmte Mindestfließgeschwindigkeit, beispielsweise 0,7m/s vorliegt. Diese Mindestfließgeschwindigkelt genügt, um eine Selbstreinigung der Leitungen während des Betriebs des Druckentwässerungssystems zu erreichen. Es kommt damit weniger zu Verstopfungen, wodurch der Wartungsaufwand für das System deutlich reduziert wird.

Die Mindestfließgeschwindigkeit in einem Streckenabschnitt wird dadurch gewährleistet, dass von den pumpbereiten Pumpstationen eine Anzahl zu einer Gruppe zusammengefasst wird, die einer Mindestanzahl an Pumpstationen für diesen Streckenabschnitt entspricht. Erfindungsgemäß ist für jeden Streckenabschnitt des Druckentwässerungssystems eine solche Mindestanzahl an Pumpstationen zur Erreichung der Mindestfließgeschwindigkeit in dem entsprechenden Streckenabschnitt empirisch ermittelt und wird für das Verfahren verwendet.

Die Bestimmung der Gruppe setzt seitens der zentralen Steuereinheit die Information voraus, welche der Pumpstationen zum Pumpen bereit sind. Hierzu übermitteln die Pumpstationen eine Information über die Pumpbereitschaft an die zentrale Steuereinheit. Eine Bereitschaft liegt dabei nicht erst dann vor, wenn ein Überschreiten eines oberen Grenzpegels wie beim Stand der Technik anzeigt, dass der Sammelbehälter voll ist. Vielmehr kann eine Pumpstationen schon dann als pumpbereit angesehen werden, wenn sie zumindest eine bestimmte Mindestmenge an Abwasser gesammelt hat, beispielsweise zwischen 30 % und 50% ihres Normvolumens (ohne Reservevolumen). Im Falle einer Pumpstation mit einem Sammelbehälter mit 100 l Nennvolumen bedeutet dies, dass ihre Pumpbereitschaft schon dann vorliegt, wenn mindestens 30 I oder mindestens 50 l gesammelt sind.

Gemäß einer Ausführungsvariante kann das Übertragen der Zustandsinformation von den Pumpstationen zur zentralen Steuereinheit automatisch erfolgen. Ein die Übertragung auslösendes Ereignis kann beispielsweise das Erreichen eines bestimmten Füllstands, das Erreichen einer bestimmten Uhrzeit, das zeitliche Erreichen eines nächsten Sendeintervalls oder der Erhalt eines Abfragesignals sein, das die Pumpstationen dazu auffordert, über ihre Pumpbereitschaft zu informieren. Auch eine Kombination dieser Ereignisse ist möglich. Das Übertragen der Zustandsinformation infolge des Erreichens eines bestimmten Füllstands hat den Vorteil, dass seitens der zentralen Steuereinheit keine Auswertung der Informationen mehr vorgenommen werden muss. Denn alle sich aufgrund einer Pegelüberschreitung bei der zentralen Steuereinheit meldenden Pumpstationen sind per Definition pumpbereit.

Vorzugsweise fragt die zentrale Steuereinheit in Abfrageintervallen die Pumpstationen nach der Zustandsinformation ab. Das Abfrageintervall oder Sendeintervall kann zwischen 10 und 15min betragen. Es sollte einerseits nicht zu lang sein, um ein Überlaufen der Pumpstationen respektive ein ungenutztes Abpumpen des Abwassers aus Sicherheitsgründen zu vermeiden. Zum anderen sollte es nicht zu kurz sein, um von den bereits pumpbereiten Pumpen mehrere Gruppen bilden und betreiben zu können.

Wird von der zentralen Steuereinheit ein Abfragesignal gesendet, können sich entweder alle Pumpstationen bei der zentralen Steuereinheit melden, indem sie die Information über ihre Pumpbereitschaft übermitteln. Einige der Pumpstationen werden dabei angeben, dass sie pumpbereit sind, wohingegen die anderen Pumpstationen mitteilen, dass sie nicht pumpbereit sind. Alternativ können sich auch nur diejenigen Pumpstationen zurückmelden, die tatsächlich pumpbereit sind. Dies hat den Vorteil, dass seitens der zentralen Steuereinheit auch nur Informationen über die tatsächlich pumpbereiten Pumpstationen vorliegt, sodass keine separate Auswertung erforderlich ist, welche der Pumpstationen pumpbereit ist und welche nicht.

Bei der Zustandsinformation kann es sich beispielweise um eine binäre Information über das Unter- oder Überschreiten eines bestimmten Füllstandsgrenzwerts oder um eine dezimale Information über die Füllstandshöhe handeln. Ferner können die binäre und die dezimale Information auch gemeinsam übertragen werden. Die Verwendung der Binärinformation hat im Vergleich zu der Dezimalinformation den Vorteil, dass die Information über die Pumpbereitschaft unmittelbar aus ihr hervorgeht und die Steuereinheit nicht erst prüfen muss, welche Pumpstationen betriebsbereit sind und welche nicht. Demgegenüber hat die Füllstandshöhe den Vorteil, dass bei der zentralen Steuereinheit füllstandsunabhängig bekannt ist, wie hoch der Füllstand in den Pumpstationen ist. Hierdurch kann seitens der zentralen Steuereinheit beispielsweise dynamisch gewählt werden, oberhalb welchem Pegel eine Pumpbereitschaft vorliegt. Liegen beispielsweise bei einem Grenzpegel von 50% des Nennvolumens zu wenig pumpbereite Pumpstationen vor, kann der Grenzpegel reduziert, beispielsweise auf 30% gesetzt werden. Es ist anzunehmen, dass diese Bedingungen von mehr Pumpstationen erfüllt ist als bei der Verwendung eines Grenzpegels von 50% des Nennvolumens.

Es ist von Vorteil, wenn die Pumpstationen ihre Aktivierung der zentralen Steuereinheit quittieren. Auf diese Weise kann die zentrale Steuereinheit sicher sein, welche Aktivierung erfolgreich war und bei welcher Pumpstation gegebenenfalls ein Fehler auftrat. In diesem Fall kann beispielsweise ein weiterer Aktivierungsversuch erfolgen oder von der zentralen Steuereinheit eine Warnmeldung abgegeben oder sogleich Wartungsauftrag ausgelöst werden.

Vorzugsweise wird die Gruppenbildung innerhalb des Abfrageintervalls oder Sendeintervalls wiederholt, insbesondere eine Anzahl an Malen. Dies bedeutet, dass aus der Menge pumpbereiter Pumpstationen, d.h. derjenigen Pumpstationen, deren Pumpbereitschaft vorliegt, innerhalb des Abfrageintervalls oder Sendeintervalls zwei oder mehrere Male eine Gruppe gebildet wird, jedenfalls sofern ausreichend pumpbereite Pumpstationen vorliegen und die Bildung einer Gruppe möglich und sinnvoll ist. Die Menge pumpbereiter Pumpstationen wird dadurch nach und nach abgearbeitet und die Pumpstationen geleert.

Geeigneterweise kann ab der Aktivierung der Pumpstation/ Pumpstationen und/oder Quittierung dieser Aktivierung seitens der zentralen Steuereinheit eine Wartezeit bis zur Wiederholung der Gruppenbildung abgewartet werden. Dies hat den Vorteil, dass nicht während der aktiven ersten Gruppe eine zweite Gruppe gebildet und aktiviert wird. Denn die Abwasserströme dieser beiden Gruppen würden sich in einem Teilbereich des Druckentwässerungssystems überlagern und somit dort eine Fließgeschwindigkeit bewirken, die unnötigerweise gegebenenfalls um ein Vielfaches höher als die Mindestfließgeschwindigkeit ist. Stattdessen erfolgt die Aktivierung einer zweiten Gruppe bevorzugt erst nachdem die Pumpstation(en) der ersten Gruppe geleert sind.

Idealerweise wird bei der Wartezeit die zur Leerung der Pumpstation oder Pumpstationen erforderliche zeitliche Dauer berücksichtigt. Zusätzlich kann ein Sicherheitspuffer berücksichtigt werden. Wird das Abwasser beispielsweise mit einem Förderstrom von 1 Liter pro Sekunde aus dem Sammelbehälter gepumpt, ist ein voller Sammelbehälter mit einem Nennvolumen von 100 Liter in 100 Sekunden geleert. Üblicherweise kann ein Sammelbehälter dann noch ein Reservevolumen aufnehmen, das beispielsweise bis zu 40% oder 50% des Nennvolumens betragen kann. Da bei dem erfindungsgemäßen Verfahren die Aktivierung der Pumpstationen nicht direkt pegelstandsabhängig erfolgt, sondern nach Erreichen eines Pumpbereitschaftspegels, der beispielsweise gerade bei dem Nennvolumen liegen kann, noch einige Zeit vergeht, und bei den verschiedenen Pumpstationen bis zu ihrer Aktivierung auch verschieden viel Zeit vergeht, wird das Reservevolumen möglicherweise bei einzelnen Pumpstationen genutzt. So ist beispielsweise bei 40 Liter Reservevolumen mit weiteren 40 Sekunden bis zur Entleerung zu rechnen. Zusätzlich kann die Übertragung des Aktivierungssignals einige Sekunden in Anspruch nehmen. So ist man bei einem 100 Liter Abwassersammelbehälter einer Pumpstation auf der sicheren Seite, wenn beispielsweise eine Wartezeit zwischen 150 und 180 Sekunden gewählt wird.

Die Anzahl an Wiederholungen kann vorzugsweise demjenigen größten Vielfachen der Wartezeit entsprechen, das kleiner als das Abfrageintervall oder Sendeintervall ist. Beträgt das Abfrageintervall oder Sendeintervall beispielsweise 10 Minuten, können im Falle einer Wartezeit von 3 Minuten maximal drei Gruppen, bei einem 15 minütigen Abfrage- oder Sendeintervall, können bis zu fünf Gruppen gebildet werden. Jeder Gruppenbildungsversuch wird nachfolgend auch als Zyklus bezeichnet.

Um das Abfrage- oder Sendeintervall bestmöglich auszunutzen, kann auch vorgesehen sein, dass die Pumpstationen der zentralen Steuereinheit eine Rückmeldung über die Beendigung des Pumpvorgangs liefern. Dies hat den Vorteil, dass, wenn die zentrale Steuereinheit feststellt, dass alle zuvor aktivierten Pumpstationen ihre Aktivität beendet haben, die nächste Gruppenbildung bzw. der nächste Zyklus, vor Ablauf der Wartezeit eingeleitet werden kann. Die Wartezeit muss also nicht unbedingt eine feste zeitliche Dauer haben. Auf diese Weise kann die Anzahl an Wiederholungen der Gruppenbildung im Abfrage- oder Sendeintervall maximiert werden.

Das Abfragen und/oder das Übertragen der Zustandsinformation, das Quittieren und/ oder Rückmelden der Pumpvorgangsbeendigung kann per Funk, vorzugsweise über ein Mobilfunknetz wie GSM (Global System for Mobile Communication) beispielsweise nach dem GPRS Standard (General Packet Radio Service) erfolgen. Dies hat den Vorteil, dass keine Kommunikationsleitungen parallel zu den Abwasserleitungen verlegt werden müssen und die Pumpstationen nicht lokal an ein MAN (Metropoliten Area Network, z.B. ein Telefonnetz) oder ein WAN (World Area Network) angeschlossen werden müssen. Idealerweise erfolgt die gesamte Kommunikation zwischen der zentralen Steuereinheit und den Pumpstationen per Funk.

Für den zweiten und jeden weiteren Zyklus ist es von Vorteil, wenn die aktivierten Pumpstationen aus der Menge pumpbereiter Pumpstationen gestrichen werden. Die seitens der zentralen Steuereinheit vorliegenden Daten werden somit aktualisiert, so dass nicht fälschlicherweise dieselbe Pumpstation zweimal in eine Gruppe eingeordnet wird. Das Streichen der Pumpstation aus der Menge pumpbereiter Pumpstationen kann unmittelbar nach der Übertragung des Aktivierungssignals, bei Erhalt der Quittierung, vorzugsweise aber nach Ablauf der Wartezeit oder bei der Rückmeldung der Beendigung des Pumpvorgangs durchgeführt werden.

Für die Bildung der Gruppe kann zumindest eine Tabelle verwendet werden, in der oder in denen die Zuordnung der Pumpstationen zu den Streckenabschnitten und die Mindestanzahl für jeden Streckenabschnitt hinterlegt sind. Diese Tabelle oder Tabellen wird/ werden dann bei jedem Zyklus ausgewertet und können nach den benötigten Zuordnungen durchsucht werden. Vorzugsweise sind die Zuordnungen der Pumpstationen zu den Streckenabschnitten in einer ersten Tabelle hinterlegt. Die Zuordnung der Mindestanzahlen zu den Streckenabschnitten kann sich aus einer zweiten Tabelle ergeben, aus der für jeden Durchmesser eines Streckenabschnitts eine Mindestanzahl an Pumpstationen zugeordnet hinterlegt ist. In der ersten Tabelle ist dann zu jedem Streckenabschnitt der Durchmesser der den Streckenabschnitt bildenden Abwasserleitung hinterlegt, welcher dann das Bindeglied zwischen den beiden Tabellen bildet. Die erste Tabelle kann eine Netzwerktabelle darstellen und die Topologie des spezifischen Druckentwässerungssystems abbilden. Die zweite Tabelle kann eine für verschiedene Druckentwässerungssysteme verwendbare Tabelle sein und allgemeingültige und/ oder empirisch ermittele Daten wie beispielsweise die Mindestanzahl an Pumpen zum Erreichen der Mindestfließgeschwindigkeit für verschiedene Rohrleitungsdurchmesser enthalten.

Vorzugsweise ist in der Tabelle oder in zumindest einer der Tabellen für jeden der Streckenabschnitte auch eine Maximalanzahl an Pumpstationen hinterlegt. Diese wird bei der Gruppenbildung ebenfalls verwendet. Mit der Maximalanzahl wird berücksichtigt, dass bei mehreren gleichzeitig pumpenden Pumpstationen, deren Gesamtförderstrom höher als der von der angeschlossenen Abwasserleitung durchleitbare Förderstrom ist, die stromabwärts liegenden Pumpstationen gegen das in dem Streckenabschnitt bereits fließenden Abwasser arbeiten. Dieses Problem lässt sich mit dem Bild veranschaulichen, dass eine überfüllte Autobahn auch nicht mehr Autos aufnehmen kann, die an den Auffahrten warten. So kann jeder Druckwasserleitung bedingt durch ihren jeweiligen Durchmesser und dem daraus resultierenden Maximaldurchsatz eine Maximalanzahl gleichzeitig aktiver Pumpstationen zugeordnet werden, die bei der Bildung der Gruppen nicht überschritten werden sollte. Hierdurch wird ein besonders energieeffizienter Betrieb erreicht.

Um eine Gruppe zu bilden, kann derjenige Streckenabschnitt ermittelt werden, dem zumindest eine pumpbereite Pumpstation zugeordnet ist und der im Vergleich zu den anderen Streckenabschnitten den kleinsten Durchmesser aufweist. Die Gruppe wird dann aus Pumpstationen gebildet, die diesem Streckenabschnitt zugeordnet sind. Dies bedeutet jedoch nicht, dass die Gruppe nur aus den diesem Streckenabschnitt zugeordneten Pumpstationen bestehen muss. Wie später noch deutlich wird, kann auch streckenabschnittsübergreifend eine Zusammenstellung von Pumpstationen zu einer Gruppe erfolgen.

Vorzugsweise wird die Suche nach dem Streckenabschnitt kleinsten Durchmessers immer, d.h. bei jeder Gruppenbildung durchgeführt. Dies bedeutet letztendlich, dass das Verfahren stets mit denjenigen pumpbereiten Pumpstationen beginnt, die am weitesten von Übergabestelle entfernten liegen. Diese werden zuerst entleert. Denn das Netz aus Abwasserleitungen weist einen umso größeren Leitungsdurchmesser auf, je näher der entsprechende Streckenabschnitt an der Übergabestelle ist. Hierdurch wird gewährleistet, dass die Mindestfließgeschwindigkeit und damit ein Reinigungseffekt über weite Teile des Streckennetzes erreicht wird.

Bei Streckenabschnitten gleichen Durchmessers in einem Druckentwässerungssystem kann jedem dieser Streckenabschnitte eine Streckenpriorität zugeordnet sein, die bei der Gruppenbildung berücksichtigt wird. Bei der Bildung der Gruppe wird dann im Falle mehrerer Streckenabschnitte mit identischem kleinsten Durchmesser derjenige Streckenabschnitt verwendet, dem die höchste Streckenpriorität zugeordnet ist. Die Gruppe wird dann nur oder zumindest aus Pumpstationen gebildet, die diesem Streckenabschnitt höchster Priorität zugeordnet sind.

Ferner ist es im Falle von mehr als zwei an denselben Streckenabschnitt angeschlossenen Pumpstationen von Vorteil, wenn jeder Pumpstation eine Pumpenpriorität zugeordnet ist. Dies ermöglicht, die Pumpstationen desselben Streckenabschnitts hierarchisch zu ordnen. Vorzugsweise kann die Pumpenpriorität für jede Pumpstation, also auch für diejenigen zugeordnet werden, die allein an einen Streckenabschnitt angeschlossen sind. In dem Fall, dass dem ermittelten Streckenabschnitt mehr pumpbereite Pumpstationen zugeordnet sind, als es die Maximalanzahl angibt bzw. erlaubt, kann dann die Gruppe nur aus denjenigen Pumpstationen gebildet werden, die die höchsten Prioritäten haben. Sind beispielsweise vier pumpbereite Pumpstationen vorhanden, obgleich die Maximalanzahl des entsprechenden Streckenabschnitts beispielsweise drei ist, werden nur die Pumpstationen mit den Prioritäten eins, zwei und drei zu der Gruppe zusammengefasst. Die Pumpstation mit der Priorität vier wird nicht berücksichtigt. Die Vergabe der Pumpenpriorität kann derart erfolgen, dass eine Pumpstation eines Streckenabschnitts eine umso höhere Priorität aufweist, je weiter sie am Anfang des jeweiligen Streckenabschnitts in Strömungsrichtung liegt. Hierdurch wird ebenfalls erreicht, dass zunächst diejenigen Pumpstationen aktiviert werden, deren gehobenes Abwasser den weitesten Weg bis zu Übergabestelle zurücklegt, so dass in weiten Streckenabschnitten des Druckentwässerungssystems ein Reinigungseffekt bewirkt wird.

Vorzugsweise können die jeweilige Streckenpriorität jedem der Streckenabschnitte zugeordnet und/ oder die jeweilige Pumpenpriorität jeder der Pumpstationen zugeordnet in der Tabelle oder zumindest einer der Tabellen hinterlegt sein. Somit kann die zentrale Steuereinheit die Bildung der Gruppe auf einfache Weise durch Auswertung der Prioritäten in der Tabelle oder den Tabellen vornehmen.

Gemäß einer vorteilhaften Weiterbildung des erfindungsgemäßen Verfahrens kann in dem Fall, das dem ermittelten Streckenabschnitt weniger pumpbereite Pumpstationen zugeordnet sind, als es die Mindestanzahl angibt, die Gruppe einerseits aus der oder den pumpbereiten Pumpstation(en) des ermittelten Streckenabschnitts und andererseits aus einer oder mehreren pumpbereiten Pumpstationen zumindest eines dem ermittelten Streckenabschnitts vorgelagerten Streckenabschnitts derart gebildet werden, dass die Mindestanzahl des ermittelten Streckenabschnitt erreicht oder sogar überschritten wird. Diese streckenübergreifende Kombination von Pumpstationen zu einer Gruppe nutzt die Menge pumpbereiter Pumpstationen optimal für die Erreichung einer Reinigungswirkung aus. Obgleich die Pumpstationen in dem vorgelagerten Streckenabschnitt nicht ausreicht, um die Mindestfließgeschwindigkeit zu erreichen (sonst wäre sie bei dem oder einem der vorherigen Zyklen bereits geleert worden), so bewirkt diese Pumpenstation jedoch eine Erhöhung der Fließgeschwindigkeit in dem ermittelten Streckenabschnitt, so dass in ebendiesem Streckenabschnitt die Mindestfließgeschwindigkeit erreicht wird.

Um ein Größtmaß an Sicherheit bei dem erfindungsgemäßen Betriebsverfahren zu gewährleisten, ist der Aktivierung der Pumpstationen durch die zentrale Steuereinheit eine dezentrale, füllstandsabhängige Steuerung übergeordnet. Dies bedeutet, dass bei Erreichen einer bestimmten Füllstandshöhe die Pumpstationen unabhängig von der Aktivierung durch die zentrale Steuereinheit eingeschaltet werden. Diese Füllstandshöhe kann beispielsweise durch die Summe aus Nennvolumen und Reservevolumen gekennzeichnet sein. Denn obgleich eine Pumpstation bei Erreichen dieser Füllstandshöhe noch ein Notvolumen aufnehmen können, bis sie überlaufen, kommt es auf den Zulauf in diese Pumpstationen an, wie schnell das Notvolumen ausgeschöpft ist. Um ein Überlaufen zu verhindern erfolgt dann die Notaktivierung bei der bestimmten Füllstandshöhe.

Im Falle einer Notaktivierung ist es sinnvoll, wenn die entsprechende Pumpstation der zentralen Steuereinheit diese Aktivierung mitteilt, sodass die zentrale Steuereinheit ihre Daten aktualisieren und diese Pumpstationen als nicht pumpbereit vermerken kann. Damit wird verhindert, dass diese Pumpstation bei einer der nächsten Gruppenbildungen berücksichtigt wird.

Weitere Merkmale und Vorteile des erfindungsgemäßen Verfahrens werden nachfolgend anhand von Ausführungsbeispielen und der beigefügten Figuren erläutert. Es zeigen:
- Figur 1:: eine Konzeptdarstellung des Systemaufbaus eines erfindungsgemäßen Druckentwässerungssystems
- Figur 2:: eine schematische Darstellung einer Pumpstation
- Figur 3:: die Netztopologie eines ersten beispielhaften Druckentwässerungssystems
- Figur 4:: die Netztopologie eines zweiten beispielhaften Druckentwässerungssystems
- Figur 5:: ein Diagramm des übergeordneten Verfahrensablaufs
- Figur 6:: ein Ablaufdiagramm für die Ermittlung der zu aktivierenden Pumpstationen
- Figur 7:: ein Ablaufdiagramm für die Ermittlung eines Streckenabschnitts
- Figur 8:: ein Ablaufdiagramm für die Gruppenstreckenbildung
- Figur 9:: ein Ablaufdiagramm für die Ermittlung des nächsten Streckenabschnitts

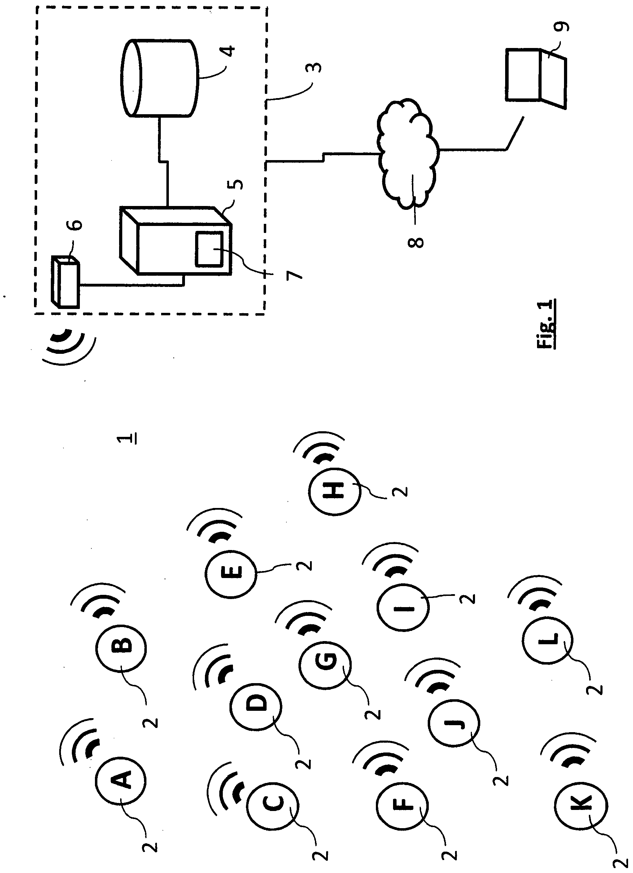

Figur 1 zeigt eine prinzipielle Darstellung eines Druckentwässerungssystems für Abwässer, wobei lediglich eine Vielzahl an Pumpstationen 2, die mit den Buchstaben A bis L bezeichnet sind, sowie die zentrale Kommunikationsstruktur abgebildet sind. Die Pumpstationen 2 stehen in Funkkommunikation mit einer zentralen Steuereinheit 3. Diese ist hier beispielhaft über ein Netzwerk 8, beispielsweise über das Internet, mit einer Rechnereinheit 9 verbunden. Von dieser Rechnereinheit 9 kann die zentrale Steuereinheit 3 überwacht, konfiguriert und/oder gesteuert werden. Hierzu kann die Steuereinheit 3 eine Web-basierte Oberfläche mittels Webserver bereitstellen, die dann auf der Rechnereinheit 9 dargestellt werden kann.

Die zentrale Steuereinheit 3 umfasst eine Verarbeitungseinheit 5, beispielsweise ein Computersystem oder ein Mikroprozessorsystem, an welche ein Datenspeicher 4 angeschlossen ist. Es sei angemerkt, dass der Datenspeicher in einer Ausführungsvariante direkt, in einer anderen Ausführungsvariante indirekt mit der Verarbeitungseinheit 5, beispielsweise über ein Netzwerk wie das Internet verbunden sein kann. So kann der Datenspeicher beispielsweise in einer Cloud liegen. Auf der Verarbeitungseinheit 5 läuft eine Logik 7, die die Daten im Datenspeicher 4 auswertet. Ebenfalls mit der Verarbeitungseinheit 5 verbunden, ist eine Sende-/ Empfangseinheit 6, mittels welcher die Funkkommunikation zu den Pumpstationen 2 erfolgt. Die Sende-/Empfangseinheit 6 kann alternativ auch durch zwei voneinander getrennte Einheiten, nämlich eine Sendeeinheit einerseits und eine Empfangseinheit andererseits realisiert sein.

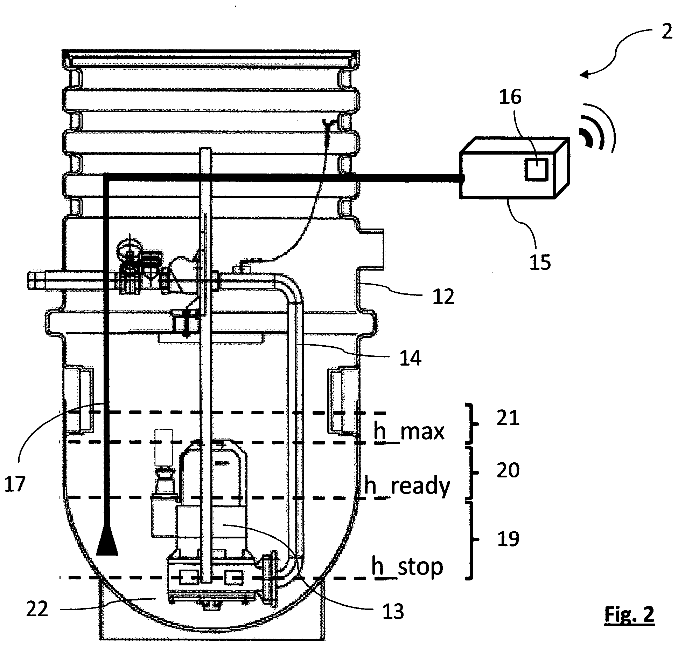

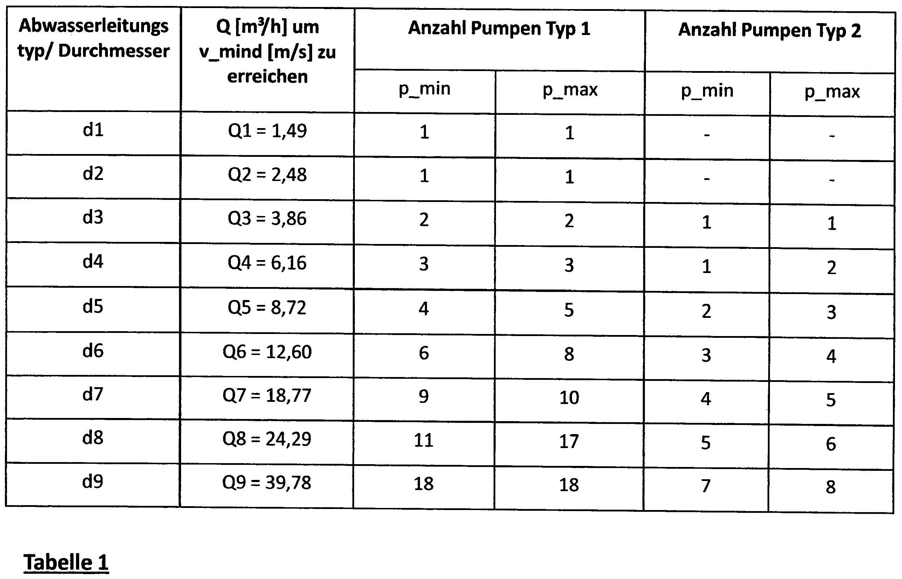

Figur 2 zeigt eine beispielhafte Darstellung einer Pumpstationen 2, die als Pumpstation A... L eingesetzt werden kann. Die Pumpstationen umfasst einen Behälter 12 zum Sammeln des Abwassers sowie ein Pumpenaggregat 13, beispielsweise eine Verdrängerpumpe oder eine Kreiselpumpe, die im unteren Bereich des Behälters 12 angeordnet ist und im Betrieb das Abwasser über eine Druckleitung 14 in eine nicht dargestellte Abwasserleitung drückt. Der Behälter 12 hat beispielsweise ein Nennvolumen 19 von 100 I. Bei der herkömmlichen 2-Punkt-Steuerung nach dem Stand der Technik, wird das Pumpenaggregat 13 aktiviert, sobald das Nennvolumen mit Abwasser gefüllt ist. Dies ist der Fall, wenn die Füllstandshöhe den ersten Grenzpegel h_ready erreicht. Durch das Heben des Abwassers sinkt die Füllstandshöhe ab und das Pumpenaggregat 13 wird wieder deaktiviert, wenn die Füllstandshöhe einen unteren Grenzpegel h_stop erreicht. Unterhalb dieses unteren Grenzpegel h_stop zieht das Pumpenaggregat 13 Luft, sodass es ohnehin nicht weiter betrieben werden kann. Infolgedessen liegt unter dem unteren Grenzpegel h_stop eine Totzone 22, aus der das Abwasser mit dem Pumpenaggregat 13 nicht herausgepumpt werden kann. Oberhalb des 1. Grenzpegels h_ready beginnt ein Reservevolumen 20, das beispielsweise 40 I umfasst. Ist auch dieses Notvolumen gefüllt, besitzt der Behälter 12 eine Füllstandshöhe, die durch einen 2. Grenzpegel h_max gekennzeichnet ist. Wird auch dieser 2. Grenzpegel überschritten, kann der Behälter 12 noch ein Notvolumen 21 aufnehmen, bis es zum Überlauf kommt.

Für eine Füllstandsmessung ist in dem Behälter 12 ein Pegelsensor 17 angeordnet, der über eine entsprechende Meßleitung mit einer außerhalb des Behälters 12 angeordneten lokalen Steuerung 15 verbunden ist. Diese Pumpensteuerung 15 ist ebenfalls mit dem Pumpenaggregat 13 verbunden, um dieses anzusteuern, insbesondere zu aktivieren und zu deaktivieren. Die Pumpensteuerung 15 fast eine lokale Sende-/Empfangseinheit 16, um einerseits Kommunikation von der zentralen Sende-/Empfangseinheit 6 zu erhalten und Kommunikation andererseits an diese zu übertragen.

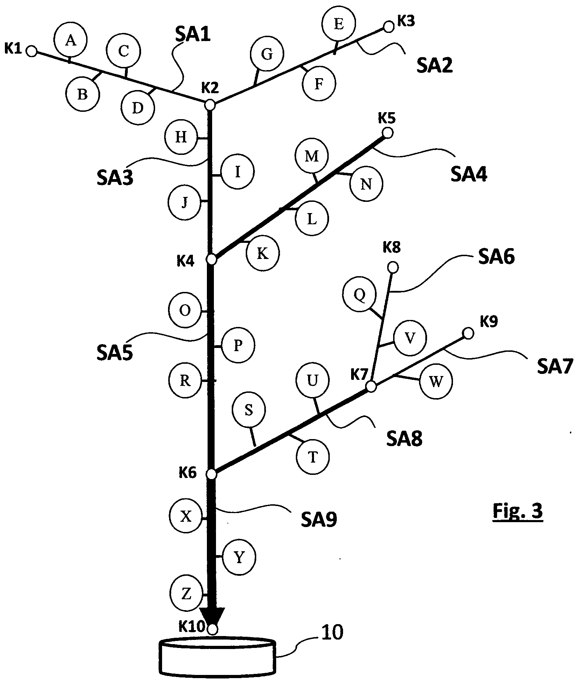

Figur 3 zeigt die Topologie eines beispielhaften Netzwerks aus Abwasserleitungen des Druckentwässerungssystems 1 mit 26 Pumpstationen 2, die mit den Buchstaben A bis Z bezeichnet sind. Das Netzwerk besteht aus insgesamt neun Streckenabschnitten, die mit SA1 bis SA9 bezeichnet und miteinander verbunden sind. Jeder Streckenabschnitt SA1 bis SA9 erstreckt sich zwischen einem Anfangspunkt und einem stromabwärts gelegenen Endpunkt, die gemeinsam Knotenpunkte K1 bis K10 des Netzwerks bilden.

Bei dem in Figur 3 dargestellten Netzwerk münden beispielsweise ein erster Streckenabschnitt SA1 ein zweiter Streckenabschnitt SA2 am Knotenpunkt K2 in einen dritten Streckenabschnitt SA3. Dieser geht am Knotenpunkt K4, an dem auch ein Zulauf aus einem vierten Streckenabschnitt SA4 erfolgt, in einen fünften Streckenabschnitt SA5 über. Und dieser geht wiederum am Knotenpunkt K6, an dem auch ein Zulauf aus einem achten Streckenabschnitt SA8 erfolgt, in einen neunten Streckenabschnitt SA9 über. Der achte Streckenabschnitt SA8 beginnt wiederum am Knotenpunkt K7, an dem sich ein sechster und ein siebter Streckenabschnitt SA6, SA7 vereinigen.

Die Streckenabschnitte SA1 bis SA9 sind in Figur 3 mit unterschiedlichen Liniendicken dargestellt, was unterschiedliche Abwasserleitungstypen bzw. Durchmesser angibt. Jeder Abwasserleitungstyp besitzt aufgrund seines Durchmessers einen bestimmten Mindestvolumenstrom Q, der erreicht werden muss, wiederum eine Mindestfließgeschwindigkeit v_mind = 0,7 m/s zu erreichen. Je nach Pumpentyp innerhalb einer Pumpstation 2, wird dieser Mindestvolumenstrom, und damit die Mindestfließgeschwindigkeit, mit (oder nur mit) einer bestimmten Anzahl an Pumpen des entsprechenden Pumpentyps erreicht. Diese für jedes Druckentwässerungssystem allgemeingültigen Daten sind in Tabelle 1 zusammengefasst.

In Tabelle 1 sind neun verschiedene Durchmesser d1 bis d9 aufgeführt. Dabei bedeuten die Durchmesser beispielsweise d1 = 32cm, d2 = 40cm, d3 = 50cm, d4 = 63cm, d5 = 75cm, d6 = 90cm, d7 = 110cm, d8 = 125cm, d9 = 160cm. Aus Tabelle 1 kann entnommen werden, dass bei einer Abwasserleitung mit einem Durchmesser d1 und einer Abwasserleitung mit einem Durchmesser d2 jeweils eine Pumpstation ausreicht, um den Mindestvolumenstrom zu erreichen. Ab einem Durchmesser d3 werden jedoch mehr Pumpstationen benötigt: bei d3: 2, bei d4:3, bei d5: 4, bei d6: 6, bei d7: 9 usw. diese Informationen werden in dem nachfolgend beschriebenen, erfindungsgemäßen Verfahren benötigt. Wie viele Pumpstationen erforderlich sind, um den Mindestvolumenstrom und damit die Mindestfließgeschwindigkeit zu erreichen ist für jeden Durchmesser d1 bis d9 in Tabelle 1 als p_min hinterlegt.

Zudem ist in Tabelle 1 auch eine Maximalanzahl an Pumpstationen für jeden Durchmesser d1 bis d9 als p_max hinterlegt. Die Minimalanzahl p_min und die Maximalanzahl p_max können für Abwasserleitungen mit kleinem Durchmesser identisch sein. Dies ist beispielsweise für die Durchmesser d1 bis d4 der Fall.

Die wesentlichen Aspekte der Topologie des Netzwerks gemäß Figur 3 ist in Tabelle 2 abgebildet, die aus Übersichtsgründen auf die zusammengehörenden Teiltabellen Tabelle 2a und 2b aufgeteilt ist. In dieser Tabelle 2 sind Streckenabschnitte SA1 bis SA9, deren Leitungsdurchmesser und die ihnen zugeordneten Pumpstationen A bis Z aufgeführt.

Für die Durchführung des nachfolgenden beschriebenen Ausführungsbeispiels des erfindungsgemäßen Verfahrens sind den Pumpstationen A bis Z und den Streckenabschnitten SA1 bis SA9 Prioritäten zugeordnet. Die Pumpenprioritäten sind bezogen auf einen Streckenabschnitt verteilt. So haben die Pumpstationen desselben Streckenabschnitts verschiedene Prioritäten.

Die Pumpenprioritätenvergabe erfolgt hierbei nach der Lage der Pumpstation innerhalb eines Streckenabschnitts. Je weiter die jeweilige Pumpstation am Anfang des Streckenabschnitts liegt, desto höher ist ihre Priorität. Im Fall des ersten Streckenabschnitts SA1, dem die vier Pumpstationen A, B, C, D zugeordnet sind, besitzt mit Blick auf Figur 3 Pumpstation A die Pumpenpriorität 1, Pumpstation B die Pumpenpriorität 2, Pumpstation C die Pumpenpriorität 3 und Pumpstation D die Pumpenpriorität 4. In entsprechender Weise sind die bunten Prioritäten den anderen Pumpstationen E bis Z vergeben.

Die Streckenprioritätenvergabe ist im Grunde nur für solche Streckenabschnitte notwendig, die identische Durchmesser aufweisen gleichwohl kann der Systematik geschuldet jeder Streckenabschnitt eine Strecken Priorität erhalten. Sofern ein Streckenabschnitt einen nur ein Mal im Netzwerk vorkommenden Durchmesser aufweist, erhält dieser Streckenabschnitt die höchste Priorität "1". Bei dem beispielhaften Netzwerk in Figur 3 besitzen der erste, der zweite, sowie der sechste und der siebte Streckenabschnitt SA1, SA2, SA6, SA7 denselben Durchmesser d4. Bei der Streckenprioritätenvergabe werden diejenigen Streckenabschnitte, die weiter von der Übergabestelle 10 entfernt sind, mit einer höheren Priorität versehen. Aus diesem Grund erhalten der erste und zweite Streckenabschnitt SA1, SA2 eine höhere Priorität als der sechste und der siebte Streckenabschnitt SA6, SA7. Der erste und zweite Streckenabschnitt SA1, SA2 sind jedoch topologisch gleichwertig, so dass hier gewählt werden kann, welcher Streckenabschnitt die höhere Priorität erhält. Gleiches gilt für den sechsten und den siebten Streckenabschnitt SA6, SA7. Bei der Streckenprioritätenvergabe für den dritten und vierten Streckenabschnitt SA3, SA4 wird berücksichtigt, dass sich der dritte Streckenabschnitt SA3 an zumindest einen vorhergehenden Streckenabschnitt anschließt, quasi eine Hauptleitung fortführt. Aus diesem Grund erhält der dritte Streckenabschnitt SA3 eine höhere Priorität als der vierte Streckenabschnitt SA4, der eine Nebenleitung bildet. Der achte Streckenabschnitt SA8, der ebenfalls denselben Durchmesser wie der dritte und vierte Streckenabschnitt SA3, SA4 besitzt, erhält die niedrigste Priorität, weil er, respektive sein Endpunkt K6 am nächsten an der Übergabestelle 10 liegt.

Sowohl die Pumpenprioritäten als auch die Streckenprioritäten sind in Tabelle 2 hinterlegt und können somit von der zentralen Steuereinheit 3 respektive ihrer Logik 7 geprüft werden.

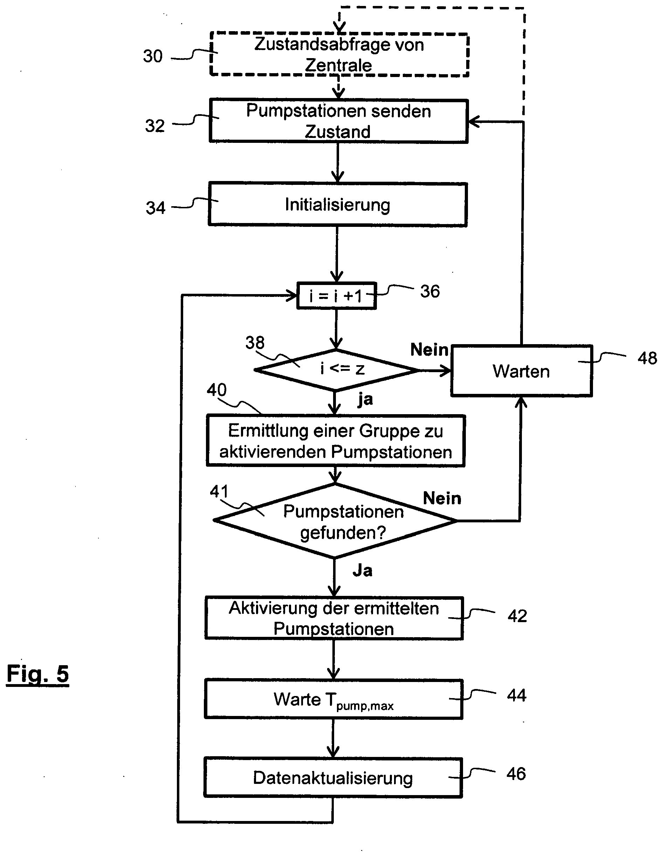

Figur 5 zeigt den allgemeinen Verfahrensablauf des erfindungsgemäßen Verfahrens. Zu Beginn des Verfahrens senden die Pumpstationen 2 eine Information über ihren Pumpzustand an die zentrale Steuereinheit 3. Dies ist im einfachsten Fall eine binäre Information darüber, dass die entsprechende Pumpstation 2 pumpbereit ist. Dies bedeutet, dass ein bestimmter Füllstand, beispielsweise der erste obere Grenzpegel h_ready erreicht oder überschritten ist. Das Senden der Zustandsinformation ist in Block 32 dargestellt. Das Senden kann von den Pumpstationen 2 in einer Ausführungsvariante automatisch erfolgen, beispielsweise in Sendeintervallen von 10 Minuten. Gemäß einer anderen Ausführungsvariante kann das Senden der Zustandsinformationen durch eine entsprechende Zustandsabfrage ausgelöst werden, die von der zentralen Steuereinheit 3 an die Pumpstationen 2 gerichtet wird, beispielsweise in Abfrageintervallen von 10 Minuten. Dies ist in dem Block 32 vorgelagerten Block 30 Figur 5 dargestellt. Auf diese Zustandsabfrage können in einer Ausführungsvariante alle Pumpstationen 2 reagieren oder nur diejenigen, bei denen tatsächlich Pumpbereitschaft vorliegt.

Als Ergebnis der Übertragung der Informationen über die Pumpzustände der Pumpstationen 2 ist seitens der zentralen Steuereinheit 3 bekannt, welche der Pumpstationen 2 aktiviert werden können, und welche nicht. Die Informationen über die jeweilige Pumpbereitschaft wird in dem Datenspeicher 4 gespeichert, insbesondere der jeweiligen Pumpstationen zugeordnet in Tabelle 2 hinterlegt. Dies ist in den Block 34 "Initialisierung" enthalten, woran sich eine Initialisierung verschiedener Variablen für die Durchführung des weiteren Verfahrens anschließt. Beispielsweise wird hier eine erste Zählvariable i mit dem Wert 0 belegt

Diese Zählvariable wird im nächsten Schritt (Block 36) um 1 erhöht. Sie gibt an, dass ein erster Zyklus beginnt. Ein Zyklus bedeutet hier, dass eine Gruppe von Pumpstationen aktiviert wird. In jedem weiteren Zyklus wird dann eine andere Gruppe von Pumpstationen aktiviert. Es ist vorgesehen, dass mehrere Zyklen innerhalb eines Sendeintervalls oder Abfrageintervalls durchgeführt werden. Da ein Zyklus jedoch eine gewisse Zeit benötigt, darf die Gesamtdauer der Zyklen die Dauer eines Sendeintervalls oder Abfrageintervalls nicht überschreiten. Es ist deshalb eine Maximalanzahl z an Zyklen vorgesehen, die nicht überschritten werden darf. Dies wird in Block 38 abgefragt. In einem Ausführungsbeispiel ist z =3. Ist die Maximalanzahl z erreicht, muss zunächst nichts weiter gemacht werden. Es wird dann gewartet, Block 48, bis das nächste Sendeintervall bzw. Abfrageintervall beginnt, d.h. bis in der einen Ausführungsvariante die Pumpstationen 2 erneut ihre Pumpzustandsinformation übertragen oder in der anderen Ausführungsvariante die Übertragung dieser Information von der zentralen Steuereinheit 3 angefragt wird.

Ist die Maximalanzahl z an Zyklen noch nicht erreicht, erfolgt die Kernprozedur des Verfahrens, nämlich die Ermittlung einer Gruppe zu aktivierender Pumpstationen 2, Block 40. Liefert diese Ermittlung zu aktivierende Pumpstationen, was in Block 41 abgefragt wird, so werden diese ermittelten Pumpstationen aktiviert, Block 42. Es wird dann eine Zeit T_{pump,max} gewartet, bis die Pumpstationen 2 mit Sicherheit geleert sind, Block 44. Beispielsweise kann die Wartezeit 3 Minuten betragen. Anschließend erfolgt eine Datenaktualisierung, Block 46, wobei der in dem Datenspeicher 4 respektive in Tabelle 2 hinterlegte Pumpzustand der zuvor aktivierten Pumpstationen aktualisiert, insbesondere auf "nicht pumpbereit" geändert wird.

Anschließend wird die Laufvariable i inkrementiert und der nächste Zyklus ausgeführt, Block 36. Die in den Blöcken 38-46 genannten Verfahrensschritte werden dabei wiederholt. Ergibt die Abfrage in Block 41, dass bei der Gruppen Ermittlung keine Pumpstationen gefunden worden sind, so ist auch an dieser Stelle das Verfahren zunächst beendet. Es beginnt dann erneut mit dem nächsten Sendeintervall bzw. Abfrageintervall, d.h. wobei in der einen Ausführungsvariante die Pumpstationen 2 erneut ihre Pumpzustandsinformation übertragen oder in der anderen Ausführungsvariante die Übertragung dieser Information von der zentralen Steuereinheit 3 angefragt wird.

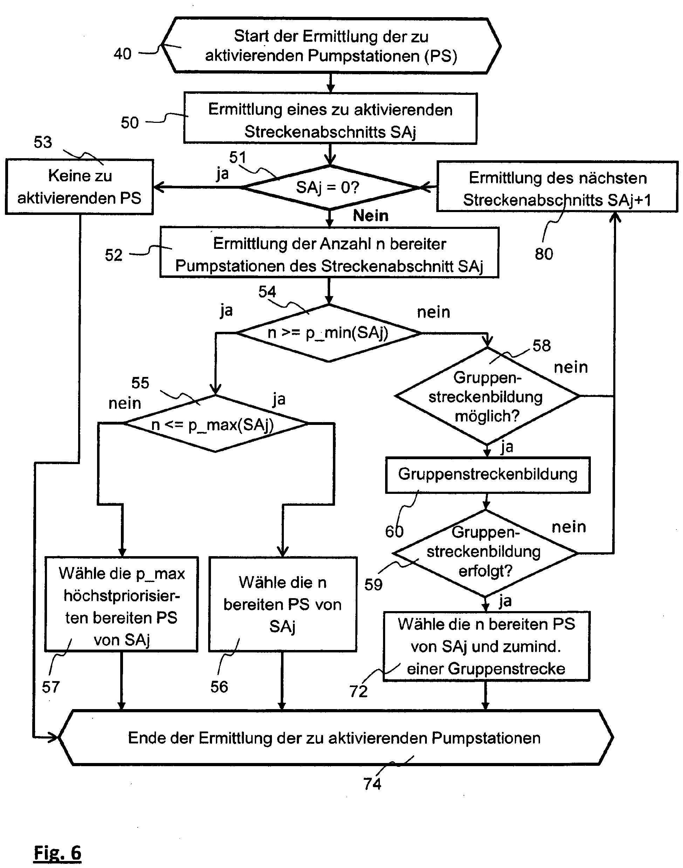

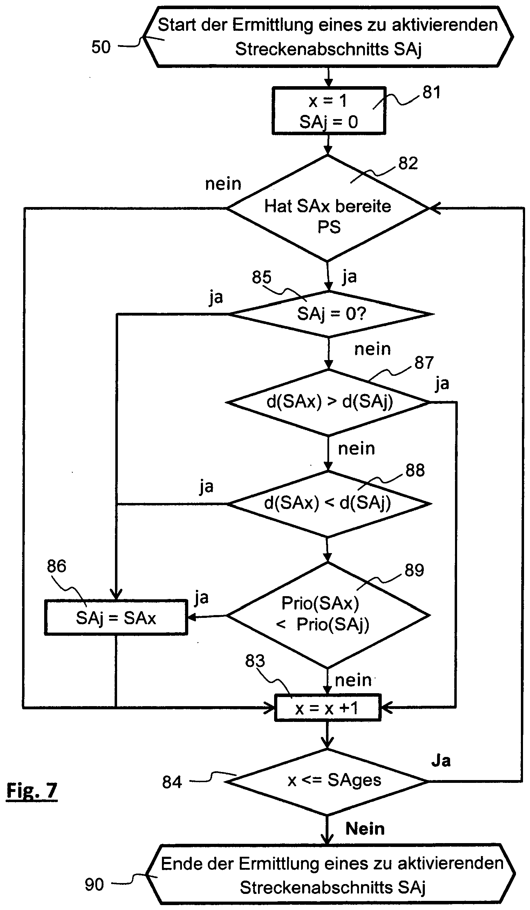

Figur 6 veranschaulicht einen beispielhaften Verfahrensablauf zur Ermittlung der Gruppe zu aktivierender Pumpstationen 2 innerhalb eines Zyklus und implementiert somit Block 40. Für die Bildung der Gruppe aus der Menge pumpbereiter Pumpstationen 2 wird zunächst ein bestimmter Streckenabschnitt SAj ermittelt, dem pumpbereite Pumpstationen 2 zugeordnet sind. Diese Ermittlung erfolgt in Block 50 und ist mit "Ermittlung eines zu aktivierenden Streckenabschnitts SAj" bezeichnet. Diese Ermittlung wird nachfolgend anhand von Figur 7 erläutert.

Hat die Streckenabschnittsermittlung einen entsprechenden Streckenabschnitt SAj geliefert (SAj ≠ 0, Abfrage in Block 51), wird zunächst die Anzahl n der an diesen Streckenabschnitt SAj angeschlossenen pumpbereiten Pumpstationen 2 ermittelt, Block 52. Hat die Ermittlung dagegen keinen Streckenabschnitt SAj geliefert (SAj ≠ 0), können keine Pumpstationen 2 (mehr) aktiviert werden, Block 53, und die Teilprozedur 40 wird beendet. Das Verfahren wird dann bei Block 41 in Figur 5 fortgesetzt, worauf dann das Abwarten der neuen Pumpzustandsinformationen folgt.

Die Anzahl n ermittelter Pumpstationen 2 wird zunächst mit der Mindestanzahl p_min(SAj) der für den ermittelten Streckenabschnitt SAj notwendigen Pumpstationen 2 verglichen, Block 54. Diese Mindestanzahl p_min ergibt sich aus der Kombination der Informationen in den Tabellen 2 und 1. Während in Tabelle 2 hinterlegt ist, welchen Durchmesser d1 bis d9 der ermittelte Streckenabschnitt SAj aufweist, ist in Tabelle 1 zu dem entsprechenden Durchmesser d1 bis d9 aufgeführt, wie viele Pumpstationen notwendig sind, um den Mindestvolumenstrom zu erreichen.

Ergibt die Abfrage in Block 54, dass genügend pumpbereite Pumpstationen 2 an dem ermittelten Streckenabschnitt SAj vorhanden sind, wird sodann untersucht, ob alle diese pumpbereiten Pumpstationen 2 aktiviert werden können oder die Gesamtanzahl n pumpbereiter Pumpstationen eine dem ermittelten Streckenabschnitt SAj zugeordnete Maximalanzahl p_max (SAj) an Pumpstationen 2 überschreitet, Block 55. Auch diese Maximalanzahl p_max ergibt sich aus der Kombination der Tabellen 2 und 1, nämlich aus dem dem ermittelten Streckenabschnitt SAj zugeordneten Durchmesser gemäß Tabelle 2 in Verbindung mit der diesem Durchmesser in Tabelle 1 zugeordneten Maximalanzahl p_max. Diese sollte nicht überschritten werden, damit nicht eine oder mehr Pumpstationen gegen den Druck, der von der oder den anderen Pumpstationen bereits aufgebaut ist, ankämpfen.

Ist die Gesamtanzahl n nicht größer als die Maximalanzahl, werden alle pumpbereiten Pumpstationen 2 des ermittelten Streckenabschnitts SAj zur Aktivierung ausgewählt, Block 56, und das Verfahren wird bei Schritt 41 in Figur 5 fortgesetzt.

Ist die Gesamtanzahl n größer als die Maximalanzahl, werden von den pumpbereiten Pumpstationen 2 des ermittelten Streckenabschnitts SAj nur eine der Maximalanzahl p_max entsprechenden Anzahl ausgewählt. Dies erfolgt anhand der Pumpenpriorität in Tabelle 2. Es werden diejenigen Pumpstationen 2 zur Aktivierung ausgewählt, die die höchste Priorität aufweisen, Block 57. Es ist zu beachten, dass die Priorität umso größer ist, je kleiner der den Parameter "Priorität" angebende numerische Wert ist. Bei p_max = 2 auszuwählenden Pumpstationen 2 von n = 3 auswählbaren Pumpstationen 2 werden also die Pumpstationen mit den Prioritäten 1 und 2 genommen. Das Verfahren wird anschließend bei Schritt 41 in Figur 5 fortgesetzt.

Ergibt die Abfrage in Block 54, dass die Anzahl n pumpbereiter Pumpstationen 2 des ermittelten Streckenabschnitts SAj nicht ausreicht, um die Mindestfließgeschwindigkeit zu erreichen (n < p_min), wird in Schritt 58 geprüft, ob der ermittelte Streckenabschnitt SAj gegebenenfalls mit einem oder mehreren in Strömungsrichtung des Netzwerks vorgelagerten Streckenabschnitten kombiniert werden kann. Dies wird als Gruppenstreckenbildung bezeichnet.

Gruppenstreckenabschnitte (GSA) zu einem bestimmten Streckenabschnitt SA1 bis SA9 werden wie die Prioritäten vor dem Verfahrensbeginn definiert und können in der Netzwerktabelle, Tabelle 2, hinterlegt sein. Gruppenstreckenabschnitte sind solche Streckenabschnitte des Netzwerks, bei denen die Aktivierung einer angeschlossenen Pumpstation 2 zur Erhöhung der Fließgeschwindigkeit in einem der nachfolgenden Streckenabschnitte in Richtung der Übergabestelle 10 führt.

Im Falle des Netzwerkbeispiels gemäß Figur 3 sind der dritte und vierte Streckenabschnitt SA3, SA4 unmittelbare Gruppenstreckenabschnitte des fünften Streckenabschnitts, siehe Tabelle 2a. Ferner sind der fünfte und achte Streckenabschnitt SA5, SA8 unmittelbare Gruppenstreckenabschnitte des neunten Streckenabschnitts SA9. Da der fünfte Streckenabschnitt SA5 aber gleichfalls Gruppenstrecken besitzt, sind auch dessen Gruppenstreckenabschnitte mittelbare Gruppenstreckenabschnitte des neunten Streckenabschnitts SA9. Somit hat SA9 die Streckenabschnitte SA3, SA4, SA5 und SA8 als Gruppenstreckenabschnitte, vgl. Tabelle 2b.

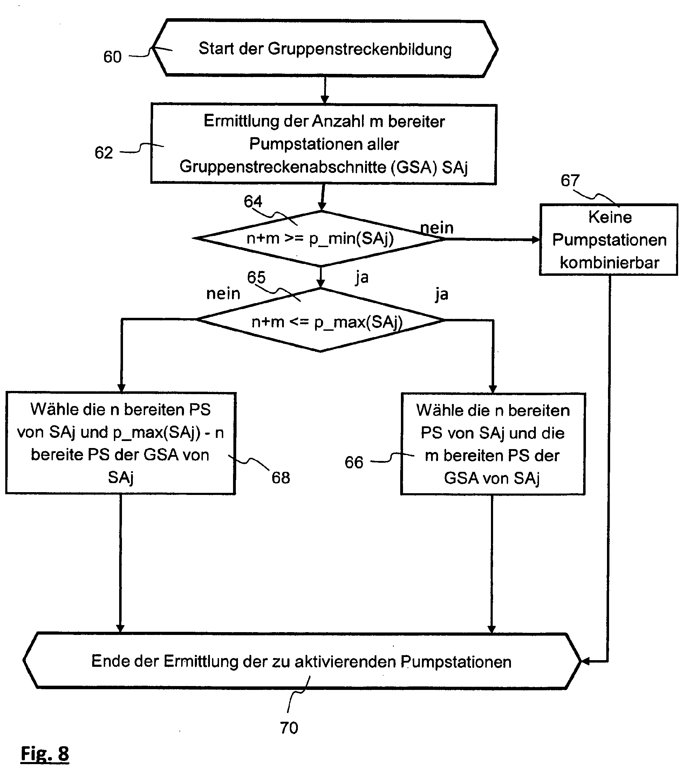

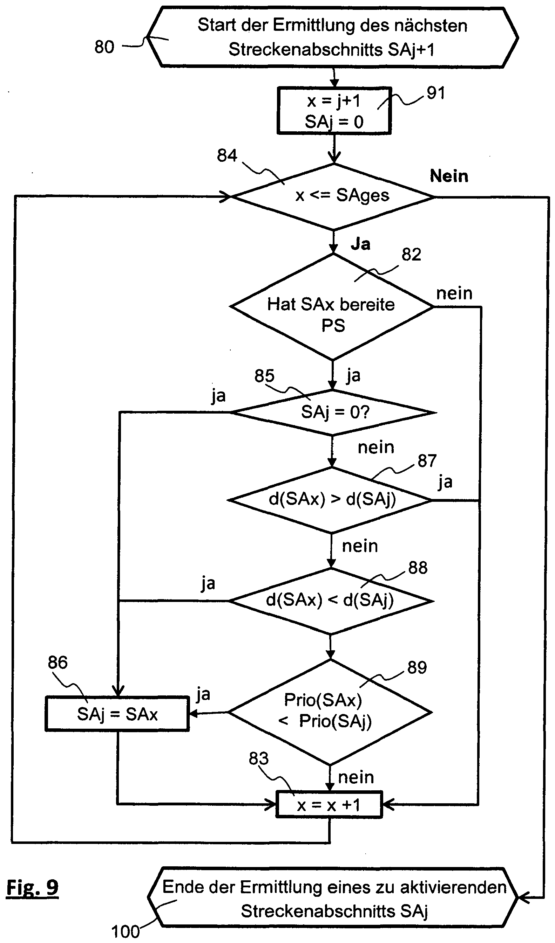

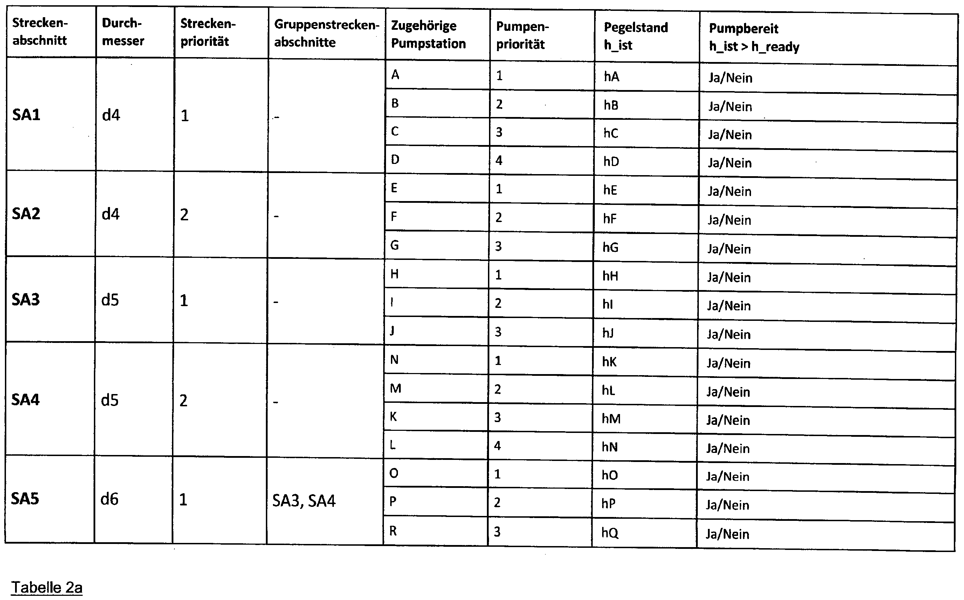

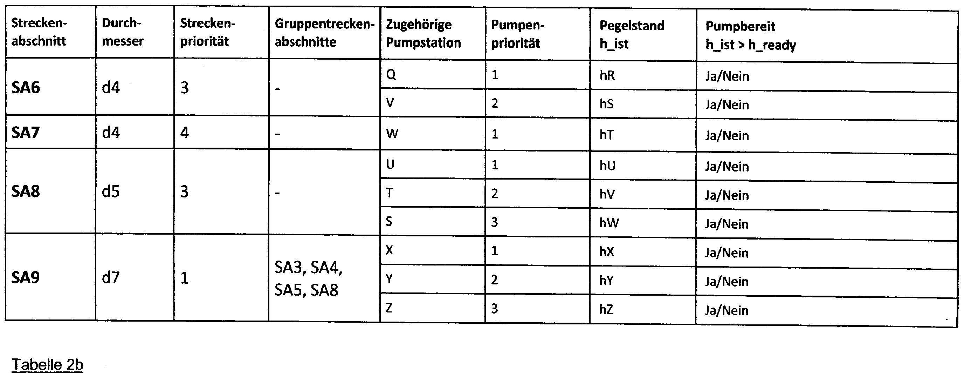

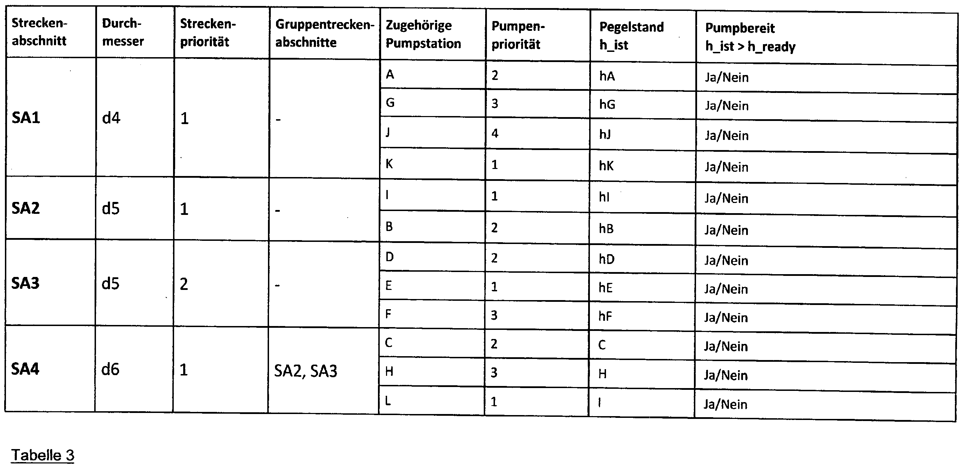

Die Abfrage, ob eine Gruppenstreckenbildung möglich ist, erfolgt in Schritt 58. Diese Abfrage kann anhand von Tabelle 2 beantwortet werden, wobei hier geprüft wird, ob dem ermittelten Streckenabschnitt SAj zumindest ein Gruppenstreckenabschnitt zugeordnet ist. Ist dies nicht der Fall, wird ein nächster Streckenabschnitt in Block 80 ermittelt, dessen Ablauf in Figur 9 dargestellt ist und nachstehend noch erläutert wird. Ist dem ermittelten Streckenabschnitt SAj jedoch zumindest ein Gruppenstreckenabschnitt zugeordnet, erfolgt in Schritt 60 die Gruppenstreckenbildung respektive der Versuch, Pumpstationen 2 des ermittelten Streckenabschnitts SAj mit Pumpstationen 2 des Gruppenstreckenabschnitts oder Gruppenstreckenabschnitte zu kombinieren. Die Gruppenstreckenbildung wird nachfolgend anhand von Figur 8 erläutert. Ob dies erfolgreich war, wird in Schritt 59 abgefragt. Verneinendenfalls erfolgt, wie zuvor beschrieben, die Ermittlung eines nächsten Streckenabschnitts Block 80. Bejahendenfalls werden dann einerseits diejenigen Pumpstationen 2, die dem ermittelten Streckenabschnitt SAj zugeordnet sind, und andererseits diejenigen pumpbereiten Pumpstationen 2 von zumindest einer der Gruppenstreckenabschnitte des ermittelten Streckenabschnitts SAj zur Aktivierung ausgewählt, Block 72. Das Verfahren wird anschließend bei Schritt 41 in Figur 5 fortgesetzt.

Ein beispielhafter Verfahrensablauf zur Ermittlung eines zu aktivierenden Streckenabschnitts SAj ist in Figur 7 dargestellt. Grundsätzlich bieten sich zwei Varianten für die Streckenabschnittsermittlung an. Ausgangspunkt können entweder die Streckenabschnitte SA1 bis SA9 sein, die nacheinander auf das Vorhandensein pumpbereiter Pumpstationen 2, den kleinsten Durchmesser und die höchste Priorität geprüft werden. Alternativ kann die Menge pumpbereiter Pumpstationen 2 Ausgangspunkt sein, zu denen nacheinander geprüft wird, welchem Streckenabschnitt sie zugeordnet sind, welche von diesen Streckenabschnitten den kleinsten Durchmesser aufweist und welche von diesen dann wiederum die höchste Priorität besitzt. Figur 7 stellt die 1. Verfahrensvariante dar, die den Block 50 in Figur 6 implementiert.

Die Streckenabschnittsermittlung beginnt mit einer Initialisierung in Schritt 81, bei der eine einen Streckenabschnitt identifizierenden Laufvariable x mit dem Wert 1 und ein Parameter SAj, der einen ermittelten Streckenabschnitt identifiziert, mit dem Wert 0 vorbelegt werden. In Schritt 82 wird zunächst abgefragt, ob der x-te Streckenabschnitt SAx pumpbereite Pumpstationen 2 aufweist. Zu Beginn des Verfahrens steht hier natürlich der erste Streckenabschnitt SA1 zu Prüfung. Sofern diesem x-ten Streckenabschnitt keine pumpbereiten Pumpstationen 2 zugeordnet sind, wird die Laufvariable x in Schritt 83 um eins inkrementiert und der nächste Streckenabschnitt SAx+1 geprüft, sofern die Gesamtanzahl SAmax an Streckenabschnitten SA1 bis SA9 noch nicht erreicht ist, Block 84. Ist die Gesamtanzahl SAges erreicht, endet die Streckenabschnittsermittlung nach Block 84. Das Verfahren wird dann in Schritt 51 von Figur 6 fortgesetzt.

Ergibt die Prüfung in Schritt 82, dass der x-te Streckenabschnitt SAx pumpbereite Pumpstationen 2 besitzt, wird in Schritt 85 geprüft, ob bereits zuvor ein Streckenabschnitt SAx als potentieller Kandidat vermerkt worden ist. In diesem Fall wäre der Parameter SAj von 0 verschieden. Gibt es noch keinen Kandidaten, SAj = 0, so wird der x-te Streckenabschnitt SAx in Schritt 86 als potentieller Kandidat in dem Parameter SAj vermerkt. Anschließend wird die Laufvariable x wieder inkrementiert und der nächste Streckenabschnitt SAx+1 geprüft. Hat auch dieser pumpbereite Pumpstationen 2, wird, da es bereits einen potentiellen Kandidaten für den zu ermittelnden Streckenabschnitt SAj gibt, nun geprüft, ob dieser nächste Streckenabschnitt SAx+1 ein besserer Kandidat als der zuvor ermittelte ist. Hierzu wird zunächst in Schritt 87 geprüft, ob der Durchmesser d(SAx) des neuen potentiellen Kandidaten SAx größer ist als der Durchmesser d(SAj) des zuvor ermittelten Kandidaten SAj. Ist dies der Fall, kann der neue potentielle Kandidat SAx kein besserer Kandidat sein, weil stets derjenige Streckenabschnitt mit kleinstem Durchmesser ermittelt werden soll. Es wird dann die Laufvariable x wieder inkrementiert und der nächste Streckenabschnitt SAx+2 geprüft.

Ergibt die Prüfung in Schritt 87 jedoch, dass der Durchmesser d(SAx) nicht größer ist, ist er entweder kleiner oder gleich groß. Ist der Durchmesser d(SAx) kleiner, Schritt 88, ist der potentielle neue Kandidat SAx ein tatsächlicher Kandidat und wird in den Parameter SAj geschrieben. Ist der Durchmesser d(SAx) nicht kleiner, folglich gleich groß, werden in Schritt 89 die Streckenprioritäten miteinander verglichen.

Ist die Streckenpriorität Prio(SAx) des potentiellen neuen Kandidaten SAx höher als die Streckenpriorität Prio(SAj) des bereits gefunden Kandidaten SAj, so ist der neue potentielle Kandidat SAx ein besserer Kandidat und wird in den Parameter SAj geschrieben, Block 86, und es wird der nächste Streckenabschnitt geprüft, Blöcke 83, 82. Ist die Priorität nicht höher, wird die Laufvariable x erneut inkrementiert und der nächste Streckenabschnitt geprüft. Es ist auch hier zu beachten, dass die Priorität umso größer ist, je kleiner der den Parameter "Priorität" angebende numerische Wert ist. Die Streckenabschnittsermittlung ist beendet, sobald in Block 84 festgestellt wird, dass alle Streckenabschnitte SA1 bis SA9 geprüft worden sind. Das Verfahren wird dann bei Schritt 51 in Figur 6 fortgesetzt.

Ein beispielhafter Verfahrensablauf zur Ermittlung des nächsten Streckenabschnitts SAj+1 nach Block 80 in Figur 6 ist in Figur 9 dargestellt. Der Ablauf unterscheidet sich nur geringfügig von dem in Figur 7 dargestellten Ablauf zur Ermittlung eines zu aktivierenden Streckenabschnitts SAj. Verfahrensblöcke, in denen dieselben Schritte bei den beiden Streckenabschnittsermittlungen durchgeführt werden, sind mit denselben Bezugsziffern versehen. Ein Unterschied bei Ermittlung des nächsten Streckenabschnitts gemäß Block 80 besteht darin, dass der Startwert der Laufvariable x der um 1 erhöhte Indexwert j des zuvor ermittelten Streckenabschnitts SAj ist. Denn die vorherige Streckenabschnittsermittlung gemäß Block 50 würde, wenn sie anstelle Block 80 erneut ausgeführt werden würde, wieder denselben Streckenabschnitt SAj liefern, der zuvor ermittelt wurde, weil sich an den Pumpbereitschaftszuständen der Pumpstationen nichts geändert hat. Deshalb wird bei der Streckenabschnittsermittlung gemäß Figur 9 mit dem auf den zuvor ermittelten Streckenabschnitt SAj nächstfolgenden Streckenabschnitt SAj+1 begonnen.

Dabei ist zunächst zu prüfen, ob die Gesamtanzahl SAges an Streckenabschnitten bereits überschritten ist, Block 84. im Vergleich zu dem Ablauf in Figur 7 ist somit der Block 84 vor den Block 82 geschaltet. Erst wenn die Prüfung in Block 84 ergibt, dass die Gesamtanzahl SAges an Streckenabschnitten noch nicht überschritten ist, werden die Schritte 82, 83, 85, 86, 87, 88 und 89 analog zur Streckenabschnittsermittlung gemäß Block 50 in Figur 7 durchgeführt. Ist die Gesamtanzahl SAges an Strecken Abschnitten überschritten, konnte kein nächster Streckenabschnitt ermittelt werden und der Parameter SAj verbleibt bei dem Wert 0, so dass anschließend in Schritt 51 festgestellt wird, dass keine zu aktivierenden Pumpstationen gefunden werden konnten. Dies führt dann infolge der Feststellung in Block 41 von Figur 5 zu einer Beendigung des aktuellen Zyklus ohne einen neuen Zyklus zu starten. Das Verfahren wird dann fortgesetzt mit dem Abrufen oder Übertragen von neuen/ aktuellen Pumpzustandsinformationen.

Es wird nun anhand von Figur 8 die Gruppenstreckenbildung gemäß Block 60 in Figur 6 beschrieben. Zu Beginn wird in Schritt 62 ermittelt, wie viele Pumpstationen 2 in den Gruppenstreckenabschnitten GSA, die dem ermittelten Streckenabschnitt SAj zugeordnet sind, pumpbereit sind. Dies wird in der Anzahl m ausgedrückt. Erreicht die Summe der pumpbereiten Pumpstationen 2 des ermittelten Streckenabschnitts SAj und seines/ seiner Gruppenstreckenabschnitte nicht die Mindestanzahl p_min(SAj) an Pumpstationen 2, die für den ermittelten Streckenabschnitt SAj erforderlich ist, siehe Block 64, so endet die Gruppenstreckenbildung, da keine Pumpstationen 2 kombiniert werden konnten, Blöcke 67, 70. Das Verfahren wird dann bei Schritt 59 in Figur 6 fortgesetzt.

Wird die Mindestanzahl p_min(SAj) erreicht, erfolgt anschließend in Schritt 65 eine Prüfung, ob die Summe der pumpbereiten Pumpstationen 2 des ermittelten Streckenabschnitts SAj und seiner Gruppenstreckenabschnitte die Maximalanzahl p_max(SAj) an Pumpstationen 2 überschreitet. Ist dies nicht der Fall, können alle pumpbereiten Pumpstationen 2 des ermittelten Streckenabschnitts SAj und seiner Gruppenstreckenabschnitte zur Aktivierung in einer Gruppe ausgewählt werden, Schritt 66.

Sofern die Maximalanzahl p_max(SAj) an Pumpstationen 2 jedoch überschritten wird, müssen aus der Menge m pumpbereiter Pumpstationen 2 der Gruppenstreckenabschnitte eine Anzahl p_max-n bestimmte Pumpstationen ausgewählt werden. Dies kann anhand der Pumpenprioritäten und der Streckenprioritäten erfolgen. Es werden diejenigen p_max-n Pumpstationen 2 der Gruppenstreckenabschnitte ausgewählt, die die höchsten Prioritäten haben. Haben zwei oder mehr Pumpstationen verschiedener Gruppenstreckenabschnitte dieselbe Pumpenpriorität wird diejenige Pumpstation 2 ausgewählt, die dem Gruppenstreckenabschnitt mit der höheren Streckenpriorität zugeordnet ist. Müssen beispielsweise p_max-n = 3 Pumpstationen 2 aus zwei Gruppenstreckenabschnitten gleichen Durchmessers mit jeweils 2 pumpbereiten Pumpstationen ausgewählt werden, werden die beiden Pumpstationen mit der Priorität 1 des einen und des anderen Gruppenstreckenabschnitts und diejenige Pumpstation mit der Priorität 2 desjenigen Gruppenstreckenabschnitts mit der Priorität 1 ausgewählt. Die Pumpstation mit der Priorität 2 des anderen Gruppenstreckenabschnitts und die beiden Pumpstationen mit der Priorität 3 werden nicht ausgewählt. Nach dieser Vorgehensweise werden in Schritt 68 die n pumpbereiten Pumpstationen 2 des ermittelten Streckenabschnitts SAj und die Anzahl p_max(SAj) - n pumpbereite Pumpstationen der Gruppenstreckenabschnitte des ermittelten Streckenabschnitts SAj zur Aktivierung als Gruppe ausgewählt. Die Gruppenstreckenbildung 60 ist an dieser Stelle beendet, Block 70, und das Verfahren wird in Schritt 59 in Figur 6 fortgesetzt.

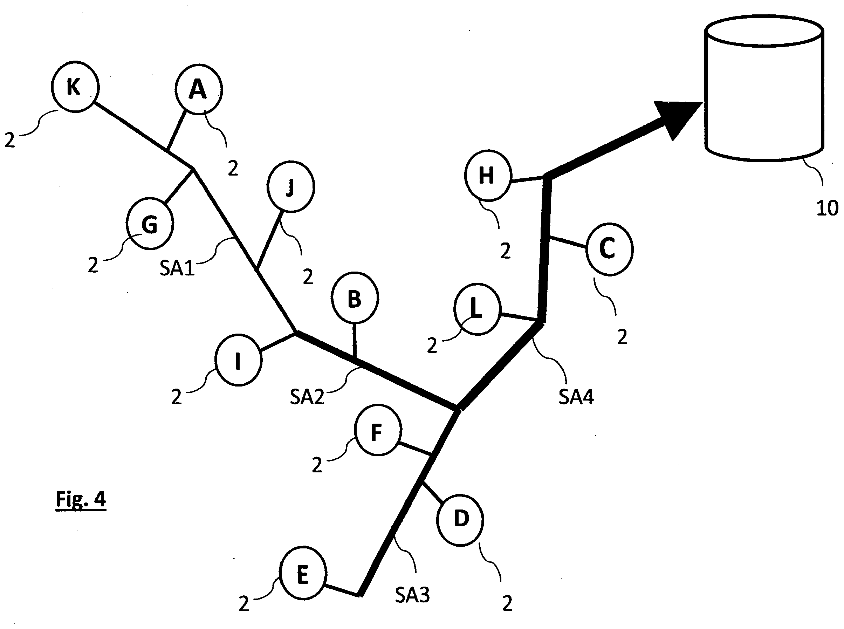

Das erfindungsgemäße Verfahren wird nun anhand von drei Beispielen, die die Netztopologie gemäß Figur 4 berücksichtigen, veranschaulicht.

Das Abwasserleitungsnetz gemäß Figur 4 umfasst 4 Streckenabschnitte SA1 bis SA4. An einen ersten Streckenabschnitt SA1 sind die vier Pumpstationen A, G, J und K angeschlossen. An den sich daran anschließenden zweiten Streckenabschnitt SA2 sind die zwei Pumpstationen I und B angeschlossen. Ein dritter Streckenabschnitt SA3 umfasst die drei Pumpstationen D, E und F und mündet gemeinsam mit dem zweiten Streckenabschnitt SA2 in einen vierten Streckenabschnitt SA4, an den die drei Pumpstationen C, H und L angeschlossen sind. Der vierte Streckenabschnitt besitzt den größten Rohrleitungsdurchmesser. Einen kleineren aber identischen Rohrleitungsdurchmesser besitzen die Streckenabschnitte SA2 und SA3. Der erste Streckenabschnitt hat schließlich den kleinsten Rohrleitungsdurchmesser. Tabelle 3 bildet die Netztopologie tabellarisch ab. Alle Pumpstationen des Druckentwässerungssystems gemäß Figur 4 besitzen Verdrängerpumpen, d.h. Pumpen des Typs 2 gemäß Tabelle 1.

Dem ersten, zweiten und vierten Streckenabschnitt SA1, SA2, SA4 sind jeweils die Streckenprioritäten "1" zugeordnet. Lediglich der dritte Streckenabschnitt besitzt aufgrund des zum zweiten Streckenabschnitt identischen Rohrleitungsdurchmessers eine niedrigere Priorität. Der 2. Streckenabschnitt besitzt hier gegenüber dem dritten Streckenabschnitt die höhere Priorität, weil er Teil einer Hauptstrecke ist, die durch den ersten, zweiten und dritten Streckenabschnitt SA1, SA2, SA4 gebildet ist. Der zweite und dritte Streckenabschnitt SA2, SA3 bilden jeweils einen Gruppenstreckenabschnitt des vierten Streckenabschnitts SA4.

Entsprechend ihrer Anordnung innerhalb des 1. Streckenabschnitts SA1 besitzt die Pumpstation K die höchste Priorität, weil sie am Anfang des ersten Streckenabschnitts SA1 angeordnet ist. Stromabwärts sind dann die Pumpstationen A, G und J zu finden, so dass Pumpstationen A entsprechend die Priorität 2, Pumpstation G entsprechend die Priorität 3 und Pumpstationen J entsprechend die Priorität 4 zugeordnet hat. Entsprechend der Reihenfolge ihrer Anordnung in Strömungsrichtung an dem jeweiligen Streckenabschnitt A1 bis SA4 sind auch den weiteren Pumpstationen I, B, D, E, F, C, H und L entsprechende Prioritäten zugeordnet. Sowohl die Pumpenprioritäten als auch die Streckenprioritäten und die Gruppenstreckenzuordnungen sind Tabelle 3 enthalten.

Es wird nun ein erstes Beispiel betrachtet, bei dem nach dem Senden der Pumpzustandsinformation, Block 32 in Figur 5 eine Pumpensituation wie folgt vorliegt: pumpbereit sind die drei Pumpstationen K, B, H. Die weiteren Pumpstationen sind nicht pumpbereit.

Es beginnt nun der 1. Zyklus, Schritte 34, 36, 38 und die Ermittlung einer Gruppe zu aktivierender Pumpstationen, Block 40. Diese beginnt wiederum mit der Ermittlung eines zu aktivierenden Streckenabschnitts, Block 50. Hierbei wird zunächst der erste Streckenabschnitt SA1 ermittelt, da dieser die pumpbereite Pumpstation K aufweist. Der erste Streckenabschnitt SA1 wird als potentieller Kandidat in den Parameter SAj geschrieben. Anschließend wird der zweite Streckenabschnitt SA2 geprüft. Da dieser die pumpbereite Pumpstationen B umfasst, kommt er zunächst als potentieller neuer Kandidat in Frage. Da jedoch der Leitungsdurchmesser d(SA2) des zweiten Streckenabschnitts SA2 größer ist als der Leitungsdurchmesser d(SAj) des ersten Streckenabschnitts SA1, ist die Abfrage in Block 87 positiv und es wird der dritte Streckenabschnitt geprüft. Dieser besitzt jedoch keine pumpbereite Pumpstation, so dass sogleich zum vierten Streckenabschnitt gegangen wird. Dieser hat zwar die pumpbereite Pumpstation H, er hat jedoch auch einen größeren Durchmesser d(SA4) als der erste Streckenabschnitt d(SAj), sodass auch für diesen Fall die Abfrage in Block 87 positiv ist und die Laufvariable x auf den Wert 5 inkrementiert wird. Dies führt in Block 84 zur Terminierung der Streckenabschnittsermittlung wobei der ermittelte Streckenabschnitt SAj der ersten Streckenabschnitt SA1 ist.

Es wird anschließend gemäß Schritt 52 die Anzahl n pumpbereiter Pumpstationen dieses Streckenabschnitts SA1 ermittelt. Da nur die Pumpstation K pumpbereit ist, ist die Anzahl n = 1. Der Durchmesser des ersten Streckenabschnitts SA1 ist ausweislich der Tabelle 3 der Durchmesser d4. Für diesen Durchmesser ist es laut Tabelle 1 nur eine Pumpstation notwendig (p_min(d4) = 1), um die Mindestfließgeschwindigkeit von 0,7m/s zu erreichen. Somit ist die Abfrage in Block 54 positiv. Ebenfalls positiv ist die Abfrage in Block 55, da die Maximalanzahl p_max (d4) an Pumpstationen für den Durchmesser d4 gleich 2 ist. Somit wird gemäß Block 56 die Pumpstation K als zu aktivierende Pumpstation gewählt. Diese wird dann in Block 42 aktiviert. Anschließend wird eine Wartezeit von 3 Minuten abgewartet und danach Pumpstation K aus der Menge pumpbereiter Pumpstationen gestrichen. Anschließend beginnt der zweite Zyklus. Aus der Streckenabschnittsermittlung, Block 50, ergibt sich nun der zweite Streckenabschnitt SA2, da dieser die pumpbereite Pumpstationen B aufweist und einen kleineren Durchmesser besitzt, als der vierte Streckenabschnitt SA4. Die Abfrage in Schritt 54 ergibt dann jedoch, dass die Anzahl n pumpbereiter Pumpstationen n = 1 kleiner als die Mindestanzahl p_min an Pumpstationen ist. Denn laut Tabelle 1 beträgt diese für den Durchmesser d5 zwei. Eine Gruppenstreckenbildung ist nicht möglich, da der zweite Streckenabschnitt SA2 gemäß Tabelle 3 keine Gruppenstreckenabschnitte zugeordnet hat. Von Block 58 wird deshalb sodann der nächste Streckenabschnitt SAj+1 gemäß Block 80 ermittelt.

Dieser nächste Streckenabschnitt ist SA4 (x=j+1, j=3; Block 81), weil nur noch dieser eine pumpbereite Pumpstation, nämlich Pumpstation H, umfasst und es keinen weiteren Streckenabschnitt größeren Durchmessers gibt. Hier scheitert es jedoch auch an dem Erreichen der für den Durchmesser d6 des vierten Streckenabschnitts SA4 notwendigen Anzahl an Pumpen, die nach Tabelle 1 p_min(d6) = 3 ist. Eine Gruppenstreckenbildung ist für den vierten Streckenabschnitt SA 4 zwar möglich, jedoch beträgt die Summe aller pumpbereiter Pumpstationen des vierten Streckenabschnitts SA4 und seiner Gruppenstreckenabschnitte SA2 und SA3 nur zwei, so dass auch eine streckenabschnittsübergreifende Kombination von Pumpstationen nicht die erforderliche Minimalanzahl p_min(d6) an Pumpstationen erreicht. Die Abfrage in Block 64 ist damit negativ, ebenso die Abfrage in Block 59, so dass erneut die Ermittlung des nächsten Streckenabschnitts SAj+1 ausgeführt wird, Block 80. Diese ergibt jedoch sofort in Block 84, dass die Gesamtanzahl an Streckenabschnitten SAges überschritten ist, und somit kein nächster Streckenabschnitt SAj ermittelt werden kann. Da der Parameter SAj infolge seiner Initialisierung in Block 81 null ist, ergibt sich aus Block 51, dass keine zu aktivierenden Pumpstationen gefunden werden konnten, siehe Block 53. Dies führt dann zu einem negativen Ergebnis in Block 41 und es wird daraufhin gewartet, bis das nächste Abfrageintervall startet bzw. neue Zustandsinformationen vorliegen.

Insgesamt wurde in dem betrachteten Abfrageintervall folglich nur ein Zyklus vollständig durchgeführt. In diesem wurde eine "Gruppe" aktiviert, die lediglich aus einer Pumpstation bestand. Von den pumpbereiten Pumpstationen K, B und H wurde nur Pumpstation K geleert. Pumpstationen B und H stehen zur Leerung im nächsten Zyklus an, sofern sie nicht durch die überlagerte lokale Pumpensteuerung 15 aktiviert werden. Eine lokal gesteuerte Aktivierung wäre der Fall, wenn der Füllstand auf den zweiten oberen Grenzpegel h_max steigt, siehe Fig. 2, d.h. das Reservevolumen vollständig ausgeschöpft ist.

Die nächste Abfrage von Pumpzuständen gemäß Schritt 30 in Figur 5 erfolgt nach Ablauf des Abfrageintervalls, das in diesem Beispiel 10 Minuten seit der letzten Abfrage beträgt. Es wird nun als zweites Beispiel angenommen, dass sich neben den noch immer pumpbereiten Pumpstationen B und H auch die Pumpstationen G, I, E, und D mit einer Zustandsinformation melden, die Bereitschaft anzeigt. Pumpbereit sind nunmehr folglich die sieben Pumpstationen B, H, G, I, E, D. Dieser Zustand führt zu der folgenden Aktivierungsreihenfolge: G; I+B; E+D, so dass am Ende des Abfrageintervalls fünf pumpbereiten Stationen in drei Zyklen geleert werden sind. Pumpstation H bleibt übrig.

Wie bei dem ersten Beispiel wird bei der Streckenabschnittsermittlung in Block 50 der erste Streckenabschnitt SA1 gewählt, da dieser eine pumpbereite Pumpstationen, nämlich Pumpstationen zugeordnet ist und er den kleinsten Leitungsdurchmesser d4 im Netzwerk aufweist. Ebenfalls wie in dem vorherigen Beispiel wird dann in Block 54 festgestellt, dass die Mindestanzahl p_min(d4) pumpbereiter Pumpstationen für den ersten Streckenabschnitt erreicht ist und ferner auch die Maximalanzahl an Pumpstationen nicht überschritten ist. Denn es liegt nur die eine pumpbereite Pumpstationen G vor, die Mindestanzahl p_min(d4) ist laut Tabelle 1 eins und die Maximalanzahl p_max(d4) zwei. Infolgedessen wird in Schritt 2 und 40 die Pumpstationen G aktiviert. Nur diese Pumpstationen bildet die in Schritt 40 ermittelte "Gruppe". Anschließend wird in Schritt 44 3 Minuten gewartet, um sicherzustellen, dass die Pumpstation G vollständig geleert ist, wenn weitere Pumpstationen aktiviert werden. Pumpstation G wird anschließend aus der Menge pumpbereiter Pumpstationen gestrichen, d.h. in Tabelle 3 als nicht pumpbereit gekennzeichnet.

Die Laufvariable i wird dann in Schritt 36 inkrementiert und es beginnt der zweite Zyklus. Es sind nun noch die Pumpstationen B, H, I, E, D pumpbereit. Die Streckenabschnittsermittlung in Block 50 ermittelt nun den zweiten Streckenabschnitt SA2, weil der erste Streckenabschnitt SA1 keine pumpbereiten Pumpstationen mehr aufweist, weil er von den möglichen Streckenabschnitten SA2, SA3, SA4 einen kleinsten Durchmesser d5 aufweist und weil er gegenüber dem dritten Streckenabschnitt SA3, der denselben Durchmesser d5 aufweist, die höhere Priorität besitzt. Aus Schritt 52 ergibt sich die Anzahl n = 2 pumpbereite Pumpstationen für den ermittelten Streckenabschnitt SAj = SA2. Laut Tabelle 1 beträgt die Mindestanzahl p_min(d5) an Pumpstationen für den Durchmesser d5 zwei, die Maximalanzahl p_max(d5) ist drei. Somit wird die Mindestanzahl p_min(d5) für den ermittelten Streckenabschnitt SAj = SA2 erreicht, Schritt 54, und die Maximalanzahl p_max(d5) nicht überschritten. Somit werden gemäß Schritt 56 die beiden pumpbereiten Pumpstationen I und B als Gruppe ausgewählt und anschließend in Schritt 42 gemeinsam aktiviert. Anschließend wird wieder 3 Minuten gewartet und die Pumpstationen I und B in der Tabelle 3 als nicht mehr pumpbereit markiert. Der zweite Zyklus ist somit ebenfalls beendet.

Die Laufvariable i wird erneut in Schritt 36 inkrementiert und es beginnt der dritte, noch mögliche Zyklus (da z=3). Es sind nun noch die Pumpstationen H, E, D pumpbereit. Die Streckenabschnittsermittlung in Block 50 ermittelt nun den dritten Streckenabschnitt SA3, weil der erste und zweite Streckenabschnitt SA1, SA2 keine pumpbereiten Pumpstationen mehr aufweisen, und weil er von den möglichen Streckenabschnitten SA3, SA4 den kleinsten Durchmesser d5 aufweist. Das Verfahren ist nun identisch zu dem vorherigen Zyklus, da zwei pumpbereite Pumpstationen vorliegen, mindestens zwei Pumpstationen zur Erreichung des Mindestdurchflusses nötig sind und die Maximalanzahl an Pumpstationen p_max(d5) = 3 nicht überschritten ist. Somit werden gemäß Schritt 56 die beiden pumpbereiten Pumpstationen E und D als Gruppe ausgewählt und anschließend in Schritt 42 gemeinsam aktiviert. Anschließend wird wieder 3 Minuten gewartet und die Pumpstationen E und D in der Tabelle 3 als nicht mehr pumpbereit markiert. Der dritte Zyklus ist somit ebenfalls beendet. Ein vierter Zyklus ist nicht mehr möglich, weil sich dieser über das Abfrageintervall hinaus erstrecken würde.

Als drittes Beispiel wird im nächsten Abfrageintervall der Pumpzustand betrachtet, dass alle zwölf Pumpstationen A, B, C, D, E, F, G, H, I, J, K, L pumpbereit sind. Ein solcher Fall kann beispielsweise dann eintreten, wenn infolge eines Stromausfalls keine Pumpstation geleert werden konnte und infolgedessen alle Pumpstationen voll gelaufen sind. Aus dem erfindungsgemäßen Verfahren ergibt sich die folgende Aktivierungsreihenfolge: K+A; G+J; I+B. Pumpstationen D, E, F sowie L, C und A bleiben übrig.

Im ersten Zyklus wird der erste Streckenabschnitt SA1 ermittelt. Die Anzahl n = 4 überschreitet die zulässige Maximalanzahl p_max(d4)=2, Block 55. somit werden die beiden höchstpriorisierte Pumpstationen K und A des ersten Streckenabschnitts SA1 ausgewählt und als Gruppe aktiviert. Im zweiten Zyklus wird erneut der erste Streckenabschnitt SA1 ermittelt, da dieser noch die Pumpstationen G und J umfasst. Hier ergibt sich in Block 55, dass die Maximalanzahl nicht überschritten ist, sodass diese beiden Pumpstationen G und J ausgewählt werden. Der nun folgende dritte Zyklus ist identisch zum zweiten Zyklus des zweiten Beispiels, sodass die Pumpstationen I und B aktiviert werden. Das Verfahren endet damit, die Pumpstationen D, E, F sowie L, C und H bleiben übrig.

### Bezugszeichenliste

- A bis Z: Pumpstationen
- 1: Druckentwässerungssystems
- 2: Pumpstationen
- 3: zentrale Steuereinheit
- 4: Datenspeicher
- 5: Verarbeitungseinheit
- 6: zentrale Sende-/Empfangseinheit
- 7: Logik
- 8: Netzwerk
- 9: Rechnereinheit
- 10: Übergabestation
- 12: Behälter
- 13: Pumpenaggregat
- 14: Druckleitung
- 15: Pumpensteuerung
- 16: lokale Sende-/Empfangseinheit
- 17: Pegelsensor
- 19: Nennvolumen
- 20: Reservevolumen
- 21: Notvolumen
- 22: Totzone

- SA1 bis SA9: Streckenabschnitt
- K1 bis K10: Netzknoten

## Patentansprüche

1. Verfahren zum Betreiben eines Druckentwässerungssystems (1) für Abwässer, das mit einander verbundene Streckenabschnitte (SA1 ... SA9) zur Leitung von Abwasser zu einer Übergabestation (10) und eine Vielzahl an die Streckenabschnitte (SA1 ... SA9) angeschlossene Pumpstationen (2) zum Sammeln des Abwassers aufweist, wobei zumindest ein Teil der Pumpstationen (2) jeweils zumindest eine ihre Pumpbereitschaft anzeigende Zustandsinformation zu einer zentralen Steuereinheit (3) übertragen, **dadurch gekennzeichnet**,
- dass aus der Menge derjenigen Pumpstationen (2), deren Pumpbereitschaft vorliegt, bezogen auf einen der Streckenabschnitte (SA1 ... SA9) eine Gruppe derart gebildet wird, dass die Anzahl der Pumpstationen (2) der Gruppe mindestens einer diesem Streckenabschnitt (SA1 ... SA9) zugeordneten Mindestanzahl (p_min) an Pumpstationen (2) entspricht, die derart gewählt ist, dass eine bestimmte Mindestfließgeschwindigkeit in diesem Streckenabschnitt zur Selbstreinigung erreicht wird, und
- dass die Pumpstationen (2) der Gruppe anschließend von der zentralen Steuereinheit (3) gleichzeitig aktiviert werden.

2. Verfahren nach Anspruch 1, **dadurch gekennzeichnet, dass** die zentrale Steuereinheit (3) in Abfrageintervallen, insbesondere alle 10 bis 15 Minuten, die Pumpstationen (2) nach der Zustandsinformation abfragt, und/oder das Übertragen der Zustandsinformation automatisch in Sendeintervallen insbesondere alle 10 bis 15 Minuten, erfolgt.

3. Verfahren nach Anspruch 1 oder 2, **dadurch gekennzeichnet, dass** die Zustandsinformation eine binäre Information über das Unter- oder Überschreiten eines bestimmten Füllstandsgrenzwerts und/oder eine dezimale Information über die Füllstandshöhe ist.

4. Verfahren nach einem der vorherigen Ansprüche, **dadurch gekennzeichnet, dass** die Pumpstationen (2) ihre Aktivierung der zentralen Steuereinheit (3) quittieren.

5. Verfahren nach einem der Ansprüche 2 bis 4, **dadurch gekennzeichnet, dass** die Bildung einer Gruppe aus der Menge derjenigen Pumpstationen (2), deren Pumpbereitschaft vorliegt, innerhalb des Abfrageintervalls oder Sendeintervalls eine bestimmte Anzahl an Malen wiederholt wird.

6. Verfahren nach Anspruch 5, **dadurch gekennzeichnet, dass** ab der Aktivierung und/oder Quittierung seitens der zentralen Steuereinheit (3) eine Wartezeit bis zur Wiederholung der Gruppenbildung abgewartet wird, die zumindest die zur Leerung der Pumpstationen (2) erforderliche zeitliche Dauer berücksichtigt.

7. Verfahren nach Anspruch 5 oder 6, **dadurch gekennzeichnet, dass** die Anzahl an Wiederholungen dem größten Vielfachen der Wartezeit entspricht, das kleiner als das Abfrageintervall oder Sendeintervall ist.

8. Verfahren nach einem der vorherigen Ansprüche, **dadurch gekennzeichnet, dass** das Abfragen und/oder das Übertragen der Zustandsinformation und/ oder das Quittieren über ein Mobilfunknetz erfolgt.

9. Verfahren nach einem der vorherigen Ansprüche, **dadurch gekennzeichnet, dass** die aktivierten Pumpstationen (2) aus der Menge pumpbereiter Pumpstationen (2) gestrichen werden.

10. Verfahren nach einem der vorherigen Ansprüche, **dadurch gekennzeichnet, dass** für die Bildung der Gruppe zumindest eine Tabelle verwendet wird, in der oder in denen die Zuordnung der Pumpstationen (2) zu den Streckenabschnitten (SA1 ... SA9) und die Mindestanzahl (p_min) für jeden Streckenabschnitt (SA1 ... SA9) hinterlegt sind.

11. Verfahren nach Anspruch 10, **dadurch gekennzeichnet, dass** in der Tabelle oder zumindest einer der Tabellen für jeden der Streckenabschnitte (SA1...SA9) eine Maximalanzahl (p_max) an Pumpstationen (2) hinterlegt ist.

12. Verfahren nach einem der vorherigen Ansprüche, **dadurch gekennzeichnet, dass** für die Bildung der Gruppe derjenige Streckenabschnitt (SAj) ermittelt wird, dem zumindest eine pumpbereite Pumpstation (2) zugeordnet ist und der im Vergleich zu den anderen Streckenabschnitten (SA1 ...SA9) den kleinsten Durchmesser aufweist, wobei die Gruppe aus Pumpstationen (2) gebildet wird, die diesem Streckenabschnitt (SA1 ...SA9) zugeordnet sind.

13. Verfahren nach Anspruch 12, **dadurch gekennzeichnet, dass** zumindest Streckenabschnitten (SA1 ...SA9) gleichen Durchmessers (d1 ...d9) eine Streckenpriorität zugeordnet ist und für die Bildung der Gruppe im Falle mehrerer Streckenabschnitte (SA1 ...SA9) mit identischen kleinsten Durchmessern derjenige Streckenabschnitt (SAj) verwendet wird, dem die höchste Streckenpriorität zugeordnet ist.

14. Verfahren nach Anspruch 12 oder 13, **dadurch gekennzeichnet, dass** jeder Pumpstation (2) eine Pumpenpriorität zugeordnet ist und in dem Fall, dass dem ermittelten Streckenabschnitt (SAj) mehr pumpbereite Pumpstationen (2) zugeordnet sind, als es die Maximalanzahl (p_max) angibt, die Gruppe aus denjenigen Pumpstationen (2) gebildet wird, die die höchsten Prioritäten haben.

15. Verfahren nach Anspruch 14, **dadurch gekennzeichnet, dass** eine Pumpstation (2) eines Streckenabschnitts (SA1 ... SA9) eine umso höhere Priorität aufweist, je weiter sie am Anfang des jeweiligen Streckenabschnitts (SA1 ... SA9) in Strömungsrichtung liegt.

16. Verfahren nach einem der Ansprüche 12 bis 15, **dadurch gekennzeichnet, dass** die jeweilige Streckenpriorität jedem der Streckenabschnitte (SA1...SA9) zugeordnet und/ oder die jeweilige Pumpenpriorität jeder der Pumpstationen (2) zugeordnet in der Tabelle oder zumindest einer der Tabellen hinterlegt ist/ sind.

17. Verfahren nach einem der Ansprüche 12 bis 16, **dadurch gekennzeichnet, dass** in dem Fall, dass dem ermittelten Streckenabschnitt (SAj) weniger pumpbereite Pumpstationen (2) zugeordnet sind, als es die Mindestanzahl (p_min) angibt, die Gruppe einerseits aus der oder den pumpbereiten Pumpstation(en) (2) des ermittelten Streckenabschnitts (SAj) und andererseits aus einer oder mehreren pumpbereiten Pumpstationen (2) zumindest eines vorgelagerten Streckenabschnitts (SA1 ...SA9) derart gebildet wird, dass die Mindestanzahl (p_min) des ermittelten Streckenabschnitt (SAj) erreicht oder überschritten wird.

18. Verfahren nach einem der vorherigen Ansprüche, **dadurch gekennzeichnet, dass** der Aktivierung der Pumpstationen (2) durch die zentrale Steuereinheit (3) eine dezentrale, füllstandsabhängige Steuerung übergeordnet ist.

## Claims

1. A method of operating a pressurized wastewater-drainage system (1) having interconnected line sections (SA1 ...SA9) for conducting wastewater to a transfer station (10) and a plurality of pump stations (2) connected to the line sections (SA1 ...SA9) for collecting the wastewater, wherein at least a portion of the pump stations (2) transmit status information indicating its respective pump readiness status to a central controller (3), **characterized**
- **in that** a group is formed from the set of pump stations (2) that are ready to pump in relation to one of the line sections (SA1 ...SA9) such that the number of pump stations (2) of the group corresponds at least to a minimum number (p_min) of pump stations (2) associated with this line section (SA1...SA9), the minimum number (p_min) of pump stations (2) being selected such that a certain minimum flow is reached in this line section for self-cleaning,
- **in that** the pump stations (2) of the group are then activated simultaneously by the central controller (3).

2. Method defined in claim 1, **characterized in that,** in polling intervals, particularly every 10 to 15 minutes, the central controller (3) queries the pump stations (2) for status information, and/or the transmission of the status information occurs automatically in transmission intervals, particularly every 10 to 15 minutes.

3. Method defined in claim 1 or 2, **characterized in that** the status information is binary information concerning the under- and overshooting of a certain fill level threshold and/or decimal information concerning the fill level.

4. Method defined in any one of the preceding claims, **characterized in that** the pump stations (2) acknowledge their activation to the central controller (3).

5. Method defined in any one of claims 2 to 4, **characterized in that** the formation of a group from the set of pump stations (2) that are pump ready is repeated within the polling interval or transmission interval a certain number of times.

6. Method defined in claim 5, **characterized in that,** starting from the activation and/or acknowledgment, a waiting time occurs on the side of the central controller (3) before the group formation is repeated, the waiting time taking into account at least the time required to empty the pump stations (2).

7. Method defined in claim 5 or 6, **characterized in that** the number of repetitions corresponds to the greatest multiple of the delay that is smaller than the polling interval or transmission interval.

8. Method defined in any one of the preceding claims, **characterized in that** the querying and/or transmission of the status information and/or the acknowledgment is effected via a mobile communications network.

9. Method defined in any one of the preceding claims, **characterized in that** the activated pump stations (2) are eliminated from the set of pump stations (2) that are pump ready.

10. Method defined in any one of the preceding claims, **characterized in that** at least one table is used to form the group in which the association of the pump stations (2) to the line sections (SA1...SA9) and the minimum number (p_min) for each line section (SA1...SA9) are stored.

11. Method defined in claim 10, **characterized in that** a maximum number (p_max) of pump stations (2) is stored in the table or in at least one of the tables for each of the line sections (SA1...SA9).

12. The method defined in any one of the preceding claims, **characterized in that,** in order to form the group, that line section (SAj) is identified with which at least one pump ready pump station (2) is associated and that has the smallest diameter in comparison to the other line sections (SA1...SA9), whereas the group being formed from pump stations (2) that are associated with this line section (SA1 ...SA9).

13. The method defined in claim 12, **characterized in that** a line priority is assigned at least to line sections (SA1 ...SA9) having the same diameter (d1 ...d9) and, to form the group, in the case of several line sections (SA1...SA9) having identical smallest diameters, that line section (SAj) is used to which the highest line priority is assigned.

14. The method defined in claim 12 or 13, **characterized in that** a pump priority is assigned to each pump station (2) and, in the event that there are more pump ready pump stations (2) associated with the identified line section (SAj) than the maximum number (p_max) indicates, the group is formed from those pump stations (2) that have the highest priorities.

15. The method defined in claim 14, **characterized in that** a pump station (2) of a line section (SA1 ...SA9) has a greater priority the nearer it lies to the origin of the respective line section (SA1 ...SA9) in a flow direction.

16. The method defined in any one of claims 12 to 15, **characterized in that** the respective line priority associated with each of the line sections (SA1...SA9) and/or the respective pump priority associated with each of the pump stations (2) is/ are stored in the table or at least one of the tables.

17. The method defined in any one of claims 12 to 16, **characterized in that,** if there are fewer pump ready pump stations (2) associated with the identified line section (SAj) than the minimum number (p_min) indicates, the group is formed on the one hand from the pump ready pump station(s) (2) of the identified line section (SAj) and, on the other hand, from one or more pump ready pump stations (2) of at least one upstream line section (SA1 ...SA9) such that the minimum number (p_min) of the identified line section (SAj) is reached or even exceeded.

18. The method defined in any one of the preceding claims, **characterized in that** a decentralized, fill level-dependent control is superordinate to the activation of the pump stations (2) by the central controller (3).

## Revendications

1. Procédé d'opération d'un système d'évacuation des eaux usées sous pression (1) ayant des sections de conduite (SA1...SA9) interconnectées pour conduire les eaux usées à une station de transfert (10) et une pluralité de stations de pompage (2) connectées aux sections de conduite (SA1...SA9) pour collecter les eaux usées, où au moins une partie des stations de pompage (2) transmet à une commande centrale (3), des informations indiquant leur état respectif de disponibilité de pompe, **caractérisé**
- **en ce qu**'un groupe est formé à partir de l'ensemble des stations de pompage (2) prêtes à pomper par rapport à l'une des sections de ligne (SA1 ...SA9) de sorte que le nombre de stations de pompage (2) du groupe correspond au moins à un nombre minimal (p_min) de stations de pompage (2) associées à cette section (SA1...SA9), le nombre minimal (p_min) des stations de pompage (2) étant sélectionné pour atteindre dans cette section un certain débit minimum à autonettoyer,
- **en ce que** les stations de pompage (2) du groupe sont alors activées simultanément par la commande centrale (3).

2. Procédé défini dans la revendication 1, **caractérisé en ce que,** dans des intervalles d'interrogation, en particulier toutes les 10 à 15 minutes, la commande centrale (3) interroge les stations de pompage (2) pour obtenir des informations d'état, et/ou la transmission des informations de l'état a lieu automatiquement dans des intervalles de transmission, notamment toutes les 10 à 15 minutes.

3. Procédé défini dans la revendication 1 ou 2, **caractérisé en ce que** les informations d'état sont des informations binaires concernant la sous-détection et le dépassement d'un certain seuil de niveau de remplissage et/ou des informations décimales concernant le niveau de remplissage.

4. Procédé défini dans l'une quelconque des revendications précédentes, **caractérisé en ce que** les stations de pompage (2) reconnaissent leur activation à la commande centrale (3).

5. Procédé défini dans l'une quelconque des revendications 2 à 4, **caractérisé en ce que** la formation d'un groupe à partir de l'ensemble des stations de pompage (2) qui sont prêtes à pomper est répétée un certain nombre de fois dans l'intervalle d'interrogation ou l'intervalle de transmission.

6. Procédé défini dans la revendication 5, **caractérisé en ce que,** à partir de l'activation et/ou de l'acquittement, un temps d'attente se produit sur le côté de la commande centrale (3) avant la répétition de la formation du groupe, le temps d'attente tenant compte au moins du temps nécessaire pour vider les stations de pompage (2).

7. Procédé défini dans la revendication 5 ou 6, **caractérisé en ce que** le nombre de répétitions correspond au plus grand multiple du retard qui est inférieur à l'intervalle d'interrogation ou d'émission.

8. Procédé défini dans l'une quelconque des revendications précédentes, **caractérisé en ce que** l'interrogation et/ou la transmission des informations d'état et/ou l'acquittement s'effectuent via un réseau de communication mobile.

9. Procédé défini dans l'une quelconque des revendications précédentes, **caractérisé en ce que** les stations de pompage activées (2) sont éliminées de l'ensemble des stations de pompage (2) qui sont prêtes à pomper.

10. Procédé défini dans l'une quelconque des revendications précédentes, **caractérisé en ce qu'**au moins un tableau est utilisé pour former le groupe dans lequel l'association des stations de pompage (2) aux sections de ligne (SA1...SA9) et le nombre minimal (p_min) pour chaque section de ligne (SA1...SA9) sont mémorisés.

11. Procédé défini dans la revendication 10, **caractérisé en ce qu'un** nombre maximum (p_max) de stations de pompage (2) est mémorisé dans la table ou dans au moins une des tables pour chacune des sections de ligne (SA 1...SA9).

12. Procédé défini dans l'une quelconque des revendications précédentes, **caractérisé en ce que,** pour former le groupe, on identifie la section de conduite (SAj) à laquelle est associée au moins une station de pompage (2) prête à être pompée et qui a le plus petit diamètre par rapport aux autres sections de conduite (SA1 ...SA9), tandis que le groupe est formé de stations de pompage (2) qui sont associées à cette section (SA1...SA9).

13. Procédé défini dans la revendication 12, **caractérisé en ce qu'une** priorité de ligne est attribuée au moins à des sections de ligne (SA1 ...SA9) ayant le même diamètre (d1 ...d9) et, pour former le groupe, dans le cas de plusieurs sections de ligne (SA1 ...SA9) ayant des diamètres identiques les plus petits, on utilise cette section de ligne (SAj) à qui la priorité la plus élevée est attribuée.

14. Procédé défini dans la revendication 12 ou 13, **caractérisé en ce qu'**une priorité de pompage est attribuée à chaque station de pompage (2) et, dans le cas où il y a plus de stations de pompage prêtes à pomper (2) associées à la section de ligne (SAj) identifiée que le nombre maximum (p_max) indiqué, le groupe est formé par les stations de pompage (2) qui ont les priorités les plus élevées.

15. Procédé défini dans la revendication 14, **caractérisé en ce qu'**une station de pompage (2) d'un section de conduite (SA1 ...SA9) est d'autant plus prioritaire qu'elle est proche de l'origine du section de conduite respectif (SA1 ...SA9) dans une direction de flux.

16. Procédé défini dans l'une quelconque des revendications 12 à 15, **caractérisé en ce que** la priorité de ligne respective associée à chacune des sections de ligne (SA1 ...SA9) et/ou la priorité de pompe respective associée à chacune des stations de pompage (2) est mémorisée dans le tableau ou au moins dans l'une des tables.

17. Procédé défini dans l'une quelconque des revendications 12 à 16, **caractérisé en ce que,** s'il y a moins de stations de pompage prêtes à pomper (2) associées à la section de ligne (SAj) identifiée que le nombre minimal (p_min) n'en indique, le groupe est formé, d'une part, de la ou des stations de pompage prêtes à pomper (2) de la section de ligne (SAj) identifiée et, d'autre part, d'une ou plusieurs stations de pompage prêtes à pomper (2) de au moins une section de ligne amont (SA1 ....SA9) de sorte que le nombre minimal (p_min) de la section de ligne identifiée (SAj) soit atteint ou même dépassé.

18. Procédé défini dans l'une quelconque des revendications précédentes, **caractérisé en ce qu'une** commande décentralisée, dépendant du niveau de remplissage, est supérieure à l'activation des stations de pompage (2) par la commande centrale (3).
